# EUROPÄISCHE PATENTSCHRIFT

(11) **EP 4 158 223 B1**
(45) Veröffentlichungstag und Bekanntmachung des Hinweises auf die Patenterteilung: **03.07.2024**
(21) Anmeldenummer: 21729842.1
(22) Anmeldetag: 26.05.2021
(51) Int. Cl.: F16G 13/16

(54) **ENERGIEFÜHRUNGSKETTE MIT BIEGSAMEN GELENKVERBINDERN, SOWIE SEITENLASCHEN UND GELENKVERBINDER HIERFÜR**
ENERGY CHAIN HAVING FLEXIBLE JOINT CONNECTORS, AND LATERAL TABS AND JOINT CONNECTORS THEREFOR
CHAÎNE PORTE-CÂBLES À ÉLÉMENTS DE RACCORDEMENT ARTICULÉS FLEXIBLES, AINSI QUE PATTES LATÉRALES ET ÉLÉMENT DE RACCORDEMENT ARTICULÉ APPROPRIÉ

(30) Priorität: 27.05.2020 DE 202020103046 U; 09.04.2021 DE 202021101897 U; 10.04.2021 DE 202021101933 U
(43) Veröffentlichungstag der Anmeldung: 05.04.2023
(73) Patentinhaber: Igus GmbH, 51147 Köln (DE)
(72) Erfinder: JAEKER, Thilo-Alexander, 53757 Sankt Augustin (DE); HERMEY, Andreas, 53773 Hennef (DE)
(74) Vertreter: Lippert Stachow Patentanwälte Rechtsanwälte
(86) Internationale Anmeldenummer: PCT/EP2021/064071
(87) Internationale Veröffentlichungsnummer: WO 2021/239821

(56) Entgegenhaltungen:
- WO-A1-02/086349
- WO-A1-2012/131033
- WO-A1-2015/160032
- WO-A1-2017/158855
- AU-A1- 2010 224 453
- DE-A1-102008 020 907
- DE-U1-202019 101 354

## Beschreibung

Die Erfindung betrifft allgemein das Gebiet der Energieführungsketten zur Führung von Leitungen, wie z.B. Kabel, Schläuchen oder dgl. zwischen zwei Anschlussstellen, von denen mindestens eine zur anderen relativbeweglich ist. Energieführungsketten dienen typisch zur dynamischen, geschützten Führung von Versorgungsleitungen zu einem fahrbaren Verbraucher.

Die Erfindung betrifft insbesondere Energieführungsketten, bei welchen die Seitenlaschen durch mindestens ein bestimmungsgemäß biegsames elastisches Gelenkelement miteinander verbunden und gegeneinander abwinkelbar sind.

Energieführungsketten mit biegsamen Gelenkverbindern bzw. Gelenkelementen, die in Abwinkelung Richtung der Seitenlaschen elastisch deformierbar sind wurden bereits in WO 02/086349 A1 vorgeschlagen und haben sich seitdem erfolgreich am Markt durchgesetzt. Wesentliche Vorteile solcher gattungsgemäßen Energieführungsketten sind ein abriebarmer Betrieb, bedingt durch die Vermeidung herkömmlicher Gelenk-/Bolzen-Verbindungen zwischen den Seitenlaschen, und hohe Laufruhe aufgrund der elastischen Wirkung der Gelenkelemente. Zudem wird aufgrund der Möglichkeit vergleichsweise kurzer Kettenteilung auch ein vibrationsarmes Verfahren aufgrund des reduzierten Polygoneffekts beim Abrollen erzielt.

Gattungsgemäße Energieführungen sind deshalb insbesondere für die Verwendung in Reinräumen geeignet, jedoch nicht ausschließlich hierfür.

Ähnliche Energieführungsketten wurden auch bereits in EP1351362A2 und in DE 10 2006 011 229 A1 bzw. US 7,204,075 B2 oder DE102008020907A1 oder WO2012/131033A1 vorgeschlagen, dort jedoch mit an den Laschen angeformten Gelenkverbindern. Die Verwendung separater Gelenkelemente gemäß WO 02/086349 A1 erlaubt demgegenüber eine günstigere Auswahl des jeweiligen Kunststoffs, sowohl der Laschen, als auch des Gelenkelements.

Typisch umfasst bei den vorgenannten bekannten Lösungen jeder Laschenstrang aufeinanderfolgende Seitenlaschen, welche mittels zumindest einem elastisch biegsamen Gelenkelementen miteinander verbunden und gegeneinander abwinkelbar sind. Die Laschenstränge sind an zumindest einigen gegenüberliegenden Seitenlaschen durch Querstege miteinander verbunden und parallel gehalten. Die Querstege und Seitenlaschen begrenzen nach außen einen Aufnahmeraum für die zu führenden Leitungen.

Bei den bekannten Energieführungsketten ist weiterhin vorgesehen, dass die Seitenlaschen einerseits Anschlagflächen umfassen, welche bei gestreckter Relativstellung der Seitenlaschen - insbesondere im freitragenden Obertrum - und andererseits weitere Anschlagflächen umfassen, welche bei vollständig abgewinkelter Relativstellung - im Umlenkbogen zwischen beiden Trumen der Energieführungskette - der Seitenlaschen aneinander anliegen.

Zumindest in der weit verbreiteten Lösung gemäß WO 02/086349 A1 ist hierzu vorgesehen, dass seitlich vorstehende Vorsprünge einer Seitenlasche in korrespondierende, vertiefte Taschen einer benachbarten Seitenlasche eingreifen, wobei Vorsprünge und Taschen anschlagswirksam zusammenwirken können. Dies erfolgt indem im gestreckter Relativstellung zumindest erste Anschlagflächen der Vorsprünge mit ersten Gegenanschlagflächen der Taschen zusammenwirken. In vollständig abgewinkelter Relativstellung wirken zumindest zweite Anschlagflächen der Vorsprünge, mit korrespondierenden zweiten Gegenanschlagflächen der Taschen, zusammen.

Die Gestaltung gemäß WO 02/086349 A1 hat sich sehr gut bewährt. Ein Nachteil ist jedoch, dass ein möglichst geradliniger Verlauf der Energieführungskette, insbesondere des Obertrums, bedingt durch Herstellungstoleranzen unter Umständen erschwert werden kann. Dies resultiert daraus, dass zwei unterschiedliche Seitenlaschen in den beiden gegenüberliegenden Laschensträngen verwendet werden, die zueinander bezüglich einer Längsmittelebene (Verfahrebene) der Energieführungskette spiegelsymmetrisch ausgeführt sind. Es handelt sich somit nicht um gleiche bzw. identische Seitenlaschen in beiden Laschensträngen, sondern getrennt hergestellte Teilen, insbesondere in zwei spiegelbildlichen Spritzgussformen hergestellte Seitenlaschen. Daraus können jedoch geringfügige Dimensionierungsunterschiede resultieren, welche zu ungleicher Kettenteilung in beiden Strängen und/oder leicht abweichenden Anschlag-Geometrien führen.

Zur Lösung dieses Problems wurde in der WO 2012/131033 A1 eine Weiterentwicklung dahingehend vorgeschlagen, dass alle Seitenlaschen der Energieführungskette zumindest mit ihren anschlagwirksamen Flächen in sich symmetrisch gestaltet werden sollen. Hierbei schlägt die WO 2012/131033 A1 die Verwendung von zwei unterschiedlichen Seitenlaschentypen in jedem Laschenstrang vor, wobei jedoch Seitenlaschen des ersten Typs und des zweiten Typs jeweils gleichermaßen, aufgrund ihrer Symmetrie, in beiden Laschenstränge verwendet werden. Toleranzbedingte Unterschiede in der Geometrie oder Länge der beiden Laschenstränge können dadurch zuverlässig ausgeschlossen werden und es resultiert ein stets geradliniger Verlauf beider Trume.

Die Energieführungskette aus WO 2012/131033 A1 weist die Merkmale nach dem Oberbegriff aus Anspruch 1 auf und wird als nächstliegender Stand der Technik angesehen. In der Praxis hat sich herausgestellt, dass die Gestaltung gemäß WO 2012/131033 A1 hinsichtlich ihrer Seitenstabilität verbesserungsfähig ist.

Eine erste Aufgabe der vorliegenden Erfindung ist es mithin, gattungsgemäße Energieführungsketten mit elastisch biegsamen Gelenkelementen, insbesondere gemäß dem Oberbegriff aus Anspruch 1 bzw. nach WO 2012/131033 A1, dahingehend weiterzuentwickeln, dass sowohl ein möglichst geradliniger Verlauf der Trume, als auch eine hohe Seitenstabilität erzielt werden kann. Diese erste Aufgabe wird, gemäß einem ersten Aspekt, gelöst mit den kennzeichnenden Merkmalen aus Anspruch 1 bzw. einer Seitenlasche nach Anspruch 16.

Eine zweite, unabhängige Aufgabe der vorliegenden Erfindung, besteht darin, eine Weiterentwicklung des biegsamen Gelenkverbinders bzw. Gelenkelements für gattungsgemäße Energieführungsketten, auch ungeachtet der Gestaltung der Seitenlaschen, vorzuschlagen. Diese Aufgabe wird nach einem zweiten unabhängigen Aspekt gelöst durch einen Gelenkverbinder nach Anspruch 20, welcher auch vorteilhaft in bekannten Energieführungsketten aus dem Stand der Technik verwendbar ist.

### ERSTER ASPEKT

Die erstgenannte Aufgabe wird bei einer gattungsgemäßen Energieführungskette mit in sich funktionalsymmetrischen, d. h. zumindest mit ihren anschlagwirksamen Flächen symmetrisch ausgeführten Seitenlaschen, in einfachster Ausführungsform bereits dadurch gelöst, dass jede Seitenlasche sowohl zwei Vorsprünge, als auch zwei Taschen umfasst, die insbesondere anschlagwirksam mit jeweils einer benachbarten Seitenlasche zusammenwirken können. Hierbei sind die beiden Vorsprünge und die beiden Taschen derselben Seitenlasche insbesondere jeweils an der Seitenlasche symmetrisch angeordnet. Die symmetrische Anordnung kann insbesondere spiegelsymmetrisch zu einer Höhenebene, insbesondere Höhenmittelebene der Seitenlasche, oder rotationssymmetrisch zu einer Höhenachse, insbesondere Höhenmittelachse der Seitenlasche gewählt sein. Somit wird die Kombination aus einer in sich symmetrischen Gestaltung der funktionswesentlichen Anschlagflächen zusammen mit geeignet symmetrischem Vorsehen von zwei Vorsprüngen und zwei Taschen in jeweils ein und derselben Seitenlasche vorgeschlagen. Die Taschen können als Ausnehmungen gestaltet sein bzw. bezeichnet werden.

Durch diese überraschend einfache Maßnahme kann eine beachtliche Verbesserung der Seitenstabilität erzielt werden, ohne dass in beiden Laschensträngen zur Längsmitteleben der Kette gespiegelte, getrennt herzustellenden Laschen verwendet werden müssen, wie z.B. aus WO 02/086349 A1 bekannt. Es werden zusätzlich die bereits aus der Symmetrie gemäß WO 2012/131033 A1 bekannten Vorteile erzielt. Nebst erhöhter Seitenstabilität wird auch die Betriebssicherheit erhöht, da ein Bruch oder Lösen eines Gelenkverbinders nicht ohne weiteres zum Lösen einer Lasche aus dem Strang führen kann. Auch wird bei Verwendung von halbstegigen Kettengestaltungen bzw. solchen mit zwei Laschentypen, erreicht, dass die Seitenstabilität und oder Torsionsfestigkeit jedes Laschenstrangs in sich nicht primär durch die Gelenkelemente gewährleistet werden muss.

Die Vorsprünge greifen in vertiefte anschlagwirksame Taschen einer benachbarten Seitenlasche, um in gestreckter Relativstellung zumindest mittels erster Anschlagflächen der Vorsprünge mit ersten Gegenanschlagflächen der Taschen zusammenzuwirken und in vollständig abgewinkelter Relativstellung zumindest mittels zweiter Anschlagflächen der Vorsprünge mit zweiten Gegenanschlagflächen der Taschen zusammenzuwirken.

Somit hat jede Seitenlasche erfindungsgemäß sowohl seitlich vorstehende und anschlagwirksame Vorsprünge, insbesondere mit ersten und zweiten Anschlagflächen, als auch entsprechende Taschen welche mit korrespondierenden ersten und zweiten Gegenanschlagflächen anschlagwirksam sind.

Bevorzugt wirken zumindest in gestreckter Relativstellung die Anschlagflächen und/oder Gegenanschlagflächen bzw. Anschläge derart zusammen, dass sie eine zumindest nahezu spielfreie Aufnahme Zug- und Druckkräften in Längsrichtung der Kette bewirken, welche sich im Betrieb typisch abwechseln beim Hin- und Herfahren. Auf diese Weise kann der Gelenkverbinder bzw. das Gelenkelement weitgehend von der Aufnahme von Zug- und/oder Druckkräften befreit sein, was sich unter anderem positiv auf die Lebensdauer der Kette auswirken kann.

Grundsätzlich sind zumindest zwei alternative Ausführungsformen im Sinne des ersten Aspekts der Erfindung möglich.

In einer besonders bevorzugten Ausführungsform haben beiden Laschenstränge als Seitenlaschen jeweils unterschiedliche Außenlaschen und Innenlaschen, wobei baugliche Außenlaschen in beiden gegenüberliegenden Strängen und baugliche Innenlaschen in beiden gegenüberliegenden Strängen verwendbar sind. Hierbei wechseln sich Außenlaschen und Innenlaschen in Längsrichtung der Kette ab.

In dieser besonders bevorzugten Ausführungsform sind sowohl die Innenlaschen als auch die Außenlaschen jeweils in Bezug auf ihre jeweilige senkrecht zur Längsrichtung verlaufende Höhenebene, insbesondere Höhenmittelebene, welche senkrecht zur Längsrichtung der Kette und zumindest im Wesentlichen senkrecht zu den Seitenlaschen verläuft, zumindest mit ihren anschlagwirksamen Anschlagflächen jeweils in sich spiegelsymmetrisch gestaltet, so dass gleiche Innenlaschen und gleiche Außenlaschen in beiden Laschensträngen verwendbar sind. Dabei kann vorzugsweise jede Innenlasche zwei Vorsprünge und zwei Taschen umfassen und jede Außenlasche zwei Vorsprünge und zwei Taschen umfassen.

Hinsichtlich der Bezeichnung sog. Außenlaschen und Innenlaschen sei angemerkt, dass diese bei der vorliegenden Erfindung grundsätzlich austauschbar ist und vorliegend abstellt auf eine Betrachtung dahingehend, welche Lasche mit der im Umlenkbereich äußeren Schmalseiten innen oder außen liegt. Die gewählte Bezeichnung dient lediglich der begrifflichen Unterscheidung und soll keine Schutzbeschränkung bewirken. Die Begriffe Außenlaschen und Innenlaschen sind hier jeweils austauschbar mit Laschen eines ersten Typs bzw. Laschen eines zweiten Typs.

Besonders bevorzugt weist eine der beiden Laschenseiten bzw. Laschenseitenflächen einer Lasche mindestens zwei Taschen und die andere der beiden Laschenseiten bzw. Laschenseitenflächen derselben Lasche mindestens zwei Vorsprünge auf.

Bevorzugt hat mindestens eine Lasche - vorzugsweise symmetrisch zur Höhenebene - mindestens zwei Vorsprünge, welche bevorzugt seitlich vorstehen. Insbesondere diese mindestens eine Lasche hat bevorzugt im zu einer Längsebene durch die Gelenkverbinder, welche mittig liegen kann aber nicht muss, den mindestens zwei Vorsprüngen gegenüberliegenden Höhenbereich mindestens zwei Taschen, welche bevorzugt als Vertiefungen, Ausnehmungen oder dgl. gestaltet sind.

Bevorzugt weisen benachbarte Laschen die Vorsprünge in unterschiedlichen Höhenbereichen auf. Bevorzugt weisen benachbarte Laschen die Taschen in unterschiedlichen Höhenbereichen auf.

In einer bevorzugten Ausführungsform wirkt bei einer ersten Lasche und einer benachbarten Lasche in einem Höhenbereich ein an einer Laschenseite bzw. Laschenseitenfläche (z.B. der Außenseite) der ersten Lasche angeordneter Vorsprung mit einer auf der anderen Laschenseite bzw. Laschenseitenfläche (z.B. der Innenseite) der benachbarten Lasche angeordneten Tasche zusammen. Bevorzugt wirken dabei in dem anderen Höhenbereich eine an der anderen Laschenseite bzw. Laschenseitenfläche (etwa Innenseite) der ersten Lasche angeordnete Tasche und ein auf der anderen Laschenseite bzw. Laschenseitenfläche (etwa Außenseite) der benachbarten Lasche angeordneter Vorsprung zusammen.

Bevorzugt sind benachbarte Laschen mit ihren Vorsprüngen bzw. Taschen sozusagen verschränkt gestaltet. Bevorzugt sind dadurch zwei benachbarte Laschen bereits ohne Gelenkverbinder bzw. Gelenkelement - abgesehen von etwaigem Spiel zwischen Anschlagflächen - bezüglich aller translatorischer Freiheitsgrade, also etwa bezüglich der Längsrichtung, der Richtung der Höhenachse und der Erstreckungsrichtung der Querstege, aneinander gehalten. Auch auf diese Weise kann nebst erhöhter Seitenstabilität auch die Betriebssicherheit und ggf. Lebensdauer erhöht werden.

Bevorzugt sind zwei benachbarte Laschen bereits ohne Gelenkverbinder bzw. Gelenkelement so aneinander festgelegt, dass eine Rotation um ihre jeweilige Höhenachse relativ zur jeweils benachbarten Lasche gesperrt ist.

Bevorzugt sind zwei benachbarte Laschen ohne Gelenkverbinder bzw. Gelenkelement so aneinander festgelegt, dass eine Relativrotation um eine in Längsrichtung der Kette - bevorzugt senkrecht zur Höhenmittelebene bzw. Höhenebene der Lasche - verlaufende Achse relativ zur jeweils benachbarten Lasche möglich ist, vorzugsweise jedoch lediglich in genau eine Drehrichtung, sodass eine entgegengesetzte Relativrotation gesperrt ist. Hierdurch kann eine einfache Montage bei hoher Festigkeit der Kette erreicht werden. Wenn dabei die zugelassene Drehrichtung bei in benachbarten Laschensträngen auf gleicher Höhe angeordneten Laschen gegensinnig ist, dann kann die Torsionsfestigkeit der Kette weiterhin verbessert sein.

In einer alternativen Ausführungsform können auch in beiden Laschensträngen durchgehend aufeinanderfolgenden baugleiche Seitenlaschen vorgesehen werden. Diese sind dann zumindest mit ihren anschlagwirksamen Anschlagflächen in sich rotationssymmetrisch in Bezug auf eine Höhenachse, welche senkrecht zur Längsrichtung der Kette und zumindest im Wesentlichen parallel zu den Seitenlaschen, vorzugsweise in deren Mittelebene, verläuft. In dieser Ausführungsform kann insbesondere vorgesehen sein, dass die rotationssymmetrische Seitenlasche zwei Vorsprünge hat, welche vom Aufnahmeraum weg vorstehen, und zwei Vorsprünge, welche zum Aufnahmeraum hin vorstehen und weiterhin auch zwei Anschlagtaschen hat die zum Aufnahmeraum hin öffnen sowie zwei Anschlagtaschen die vom Aufnahmeraum weg öffnen.

Weiterhin werden unabhängig entsprechende Seitenlaschen in Anspruch 16 beansprucht.

Bevorzugte Weiterbildungen der Erfindung(en) sind in den Unteransprüchen 3 bis 4 bzw. 7 bis 15 sowie 17 bis 19 angegeben.

### ZWEITER ASPEKT

Ferner betrifft die Erfindung, zur Lösung der zweitgenannten Aufgabe als für sich genommen erfindungswesentlichen weiteren Aspekt auch ein Gelenkelement bzw. einen Gelenkverbinder mit den Merkmalen aus Anspruch 20.

Ein Gelenkverbinder nach dem Oberbegriff aus Anspruch 20, welcher auf bekannte Merkmale aus WO 02/086349 A1 abstellt, zeichnet sich erfindungsgemäß dadurch aus, dass der Querschnitt des Befestigungsbereichs für einen bei Abwinkelung bzw. bestimmungsgemäßer Biegung drehfesten Formschluss in der entsprechenden Befestigungsaufnahme ausgeführt ist; und/oder der Befestigungsbereich zumindest an seinem in Längsrichtung weisenden Stirnende eine abgeflachte und/oder gekrümmte Anlagefläche umfasst. Die Anlagefläche kann dabei insbesondere einen Krümmungsradius haben deutlich größer ist, als die Hälfte der größten Querschnittabmessung des Befestigungsbereichs, insbesondere größer als der Radius eines Umkreises am Querschnitt des Befestigungsbereichs.

Durch eine drehfeste Befestigung wird Abrieb vermieden, was insbesondere bei Reinraumanwendungen vorteilhaft ist und allgemein die Lebensdauer erhöht.

Durch die abgeflachte und/oder relativ flach gekrümmte Anlagefläche wird eine bessere Krafteinleitung, insbesondere von Druck- bzw. Schubkräften in das Gelenkelement ermöglicht, sodass dieses auch zur weitergehenden Dämpfung bei Übergang in die Strecklage d.h. insbesondere auch zur Geräuschminderung in weitergehendem Ausmaß nutzbar ist und/oder eine Vorspannung im gestreckten Trum unterstützen oder bewirken kann. Beide Wirkungen sind besonders vorteilhaft in Kombination mit der gespaltenen Ausführung des biegsamen mittleren Gelenkbereichs, welcher zwei gegensinnig nach außen gewölbte Materialbereiche mit einem dazwischenliegenden beidseitig offenen Hohlraum aufweist.

Der gespaltene mittlere Gelenkbereich kann eine besondere Eignung des Gelenkelements bzw. Gelenkverbinders für Anwendungen in Energieführungsketten bewirken, in denen das Gelenkelement bzw. der Gelenkverbinder zumindest zeitweise und wiederkehrend gestaucht wird. Eine Stauchung kann durch eine Vergrößerung des Abstands der zwei gegensinnig nach außen gewölbten Materialbereiche aufnehmbar sein. Eine Stauchung kann insbesondere ohne Bewirken eines Drehmoments auf die Befestigungsbereiche oder auf etwaige hieran angrenzende Übergangsbereiche aufgenommen werden.

Der gespaltene mittlere Gelenkbereich kann eine besondere Eignung des Gelenkelements bzw. Gelenkverbinders bewirken, Torsionsbelastungen, etwa um eine Achse senkrecht zur Höhenebene einer Energieführungskette bzw. um eine Achse in Längsrichtung des Gelenkelements bzw. Gelenkverbinders dauerhaft zu widerstehen.

Es hat sich gezeigt, dass die mit dem gespaltenen mittleren Gelenkbereich einhergehende Verringerung der Zugfestigkeit des Gelenkelements bzw. Gelenkverbinders, , weitgehend unschädlich ist, insbesondere bei einer Energieführungskette, bei der zumindest in gestreckter Relativstellung die Anschlagflächen und/oder Gegenanschlagflächen bzw. Anschläge derart zusammenwirken, dass sie eine Aufnahme der Zugkräfte in Längsrichtung der Kette und deren Übertragung unmittelbar von einer auf die nächste Seitenlasche bewirken. Hierdurch kann das Gelenkelement bzw. der Gelenkverbinder im Betrieb weitgehend von Zugkräften entlastet werden.

Beim Gelenkverbinder ist der Querschnitt des Befestigungsbereichs bevorzugt im wesentlichen trilobular bzw. näherungsweise dreieckig ausgeführt ist. Der Körper des Gelenkverbinders kann insbesondere einen plattenartigen Übergangsbereich zwischen jedem Befestigungsbereich und dem gespaltenen mittleren Gelenkbereich aufweisen.

Bevorzugt ist der Gelenkverbinder einstückig aus Kunststoff insbesondere aus einem biegeelastischen Kunststoff hergestellt.

Bevorzugte Weiterbildungen des Gelenkverbinders sind vorstehend und weiter unten erläutert.

### DRITTER ASPEKT

Die Erfindung betrifft in einer weiteren, unabhängigen Variante eine Energieführungskette gemäß dem Oberbegriff von Anspruch 25. Ferner betrifft die Erfindung ein Seitenteil zu Ausbildung einer Energieführungskette sowie ein Verfahren zur Herstellung einer Energieführungskette.

Derartige Energieführungsketten sind beispielsweise aus der WO 2014/161763 A1 oder der WO 02/086349 A1 bekannt und werden für viele Anwendungsfälle eingesetzt. Die Energieführungsketten weisen hierbei Laschenstränge auf, welche beispielsweise aus alternierenden Innen- und Außenlaschen ausgebildet sind, was jedoch den Nachteil aufweist, dass zur Ausbildung der Innenlaschen und der Außenlaschen eines Laschenstranges verschiedene Werkzeuge wie beispielsweise Spritzgusswerkzeuge eingesetzt werden müssen, sodass die Herstellungskosten vergleichsweise hoch sind. Andererseits können die beiden Laschenstränge auch jeweils aus nur einem Laschentyp zusammengesetzt sein, sodass also jeder Laschenstrang jeweils aus baugleichen Laschen besteht, die Laschen der beiden Laschenstränge sind jedoch spiegelbildlich zueinander ausgebildet in Bezug auf eine Spiegelebene, welche in der Mitte der Energieführungskette und parallel zu den beiden Seitenflächen der Laschen verläuft. Auch hier sind zur Herstellung der Laschen unterschiedliche Werkzeuge wie beispielsweise Spritzgusswerkzeuge erforderlich.

Ferner hat es sich als weiteres Problem herausgestellt, dass wenn die Laschen der beiden Laschenstränge insgesamt mit verschiedenen Werkzeugen hergestellt werden, aufgrund stets gegebener Fertigungstoleranzen die beiden Laschenstränge abgesehen von der Spiegelbildsymmetrie derselben nicht exakt dieselben Maße aufweisen. So summieren sich über einen Laschenstrangabschnitt mit mehreren Laschen die besagten Fertigungstoleranzen, sodass die Laschenstränge sich in ihrer Länge geringfügig aber dennoch signifikant unterscheiden. Dies könnte durch ein Spiel in den Gelenkverbindungen zwischen benachbarten Laschen eines Stranges aufgefangen werden, ein derartiges Gelenkspiel ist jedoch unerwünscht, da dieses zu erhöhtem Abrieb, schlechteren Laufeigenschaften bei der Verfahrung der Energieführungskette und dergleichen führt. Wird ein derartiges Gelenkspiel vermieden, so führen diese geringfügigen Längenunterschiede der Laschenstränge dazu, dass bei der Verfahrung der Energieführungskette diese zu einem geringfügigen zumeist seitlichen Verzug bei einer an sich geradlinigen Verfahrbewegung der Energieführungskette führt. Dies verschlechtert jedoch die Laufeigenschaften der Kette und führt zu erhöhtem Abrieb und Verschleiß der Kettenglieder, insbesondere der Gelenkverbindungen. Diese Problematik ist verschärft, wenn die jeweilige Energieführungskette beispielsweise unter Reinraumbedingungen oder bei hohen Verfahrgeschwindigkeiten zu betreiben ist.

Der Erfindung liegt somit auch als eine weitere unabhängige dritte Aufgabe das Ziel zugrunde, eine gattungsgemäße Energieführungskette bereitzustellen, welche bei der Verfahrbewegung der Energieführungskette verbesserte Laufeigenschaften insbesondere bezüglich eines zu vermeidenden seitliches Verzugs der Kette bei deren Verfahrbewegung und geringeren Verschleiß aufweist und welche konstruktiv besonders einfach ausgebildet ist und welche bevorzugt für den Einsatz in Reinraumbedingungen geeignet ist.

Diese unabhängige dritte Aufgabe wird durch eine Energieführungskette gemäß Anspruch 25 und durch Laschen gemäß Anspruch 39 gelöst. Vorteilhafte Ausführungsformen ergeben sich aus den Unteransprüchen.

Gemäß dieser weiteren Variante erfindungsgemäß ist die Energieführungskette derart ausgebildet, dass durchgehend über einen zumindest mehr als drei benachbarte Kettenglieder umfassenden Kettenabschnitt, welcher die zumindest zwei oder sämtlichen der Laschenstränge umfasst, die Laschenstränge insgesamt durchgehend aus zueinander baugleichen Laschen aufgebaut sind (im folgenden auch "der Kettenabschnitt" genannt), so dass die jeweilige Lasche wahlweise an beliebiger Position an jedem der verschiedenen Stränge des Kettenabschnittes anordenbar ist. Die insbesondere gemäß dieser weiteren Variante erfindungsgemäße Kette weist hervorragende Laufeigenschaften und weiter verringerten Verschleiß auf und ist auch für den Betrieb unter Reinraumbedingungen bei hohen Verfahrgeschwindigkeiten besonders geeignet, sowie besonders einfach und kostengünstig herstellbar.

Durch die gemäß der weiteren Variante erfindungsgemäße Verwendung durchgehend baugleicher Laschen in mehreren oder sämtlichen Kettensträngen des Kettenabschnittes können sämtliche der Laschen des Kettenabschnittes wahlweise in einem der genannten zumindest zwei oder sämtlichen Laschensträngen der Energieführungskette an beliebiger Position in dem jeweiligen Laschenstrang eingesetzt werden. Ferner bevorzugt können sämtliche der Laschen des Kettenabschnittes in ein und demselben Formgebungswerkzeug, insbesondere Spritzgusswerkzeug, hergestellt werden. "Wahlweise einsetzbar" heißt hierbei, dass durch die Anordnung der jeweiligen Lasche in dem einen oder anderen Strang der Kette den Aufbau der Kette und/oder deren Maße und/oder deren Funktionalität nicht beeinflusst, was auch für die jeweilige Position innerhalb eines Laschenstranges gilt. Die Herstellung ist somit besonderes kostengünstig Herstellung der Laschen. Die Laschen sind hierbei bevorzugt Kunststoffteile, insbesondere Kunststoff-Spritzgussteile, bei welchen sich die erfindungsgemäßen Vorteile, auch aufgrund der Schrumpfeigenschaften der Kunststoffteile bei deren Herstellung, in besonderer Weise ergeben.

Ferner ergibt sich der Vorteil, dass die Laschenstränge bzw. die Energieführungskette (im Folgenden auch einfach "Kette" genannt) einfacher zusammengesetzt werden kann, da hierbei nicht mehr darauf geachtet werden muss, ob die jeweilige Lasche in dem einen oder in dem anderen Laschenstrang der Kette oder in einer bestimmten Position innerhalb desselben anzuordnen ist. Dies macht auch die Bauteilhandhabung und -bevorratung der Laschen einfacher. Dies kann beispielsweise für ein manuelles oder auch automatisiertes Zusammensetzen der Kettenglieder bzw. der Kette insgesamt gelten.

Ferner sind hierdurch die Laufeigenschaften der Kette gleichmäßiger, auch in Hinsicht auf die Vermeidung eines seitlichen Verzugs der Kette bei deren Verfahrbewegung, und Verschleiß der Gelenkverbindungen bei der Verfahrbewegung der Kette wird verringert. Der "seitliche Verzug" der Kette macht sich dadurch bemerkbar, dass bei einer Verfahrung der Kette, beispielsweise einer geradlinigen Verfahrung, auf den Kettenmitnehmer eines beweglichen Anschlusspunktes, an welchem das Kettenende festgelegt ist, geringe Querkräfte wirken, welche bei einer theoretischen idealen Kette nicht gegeben wären. Anderseits kann der seitliche Verzug dazu führen, dass bei der Verfahrung der Kette diese von der Solllage des Verfahrweges abweicht. Dies wird dadurch vermieden, dass gemäß der weiteren Variante erfindungsgemäß sämtliche Laschen des Kettenabschnittes baugleich sind, wodurch Fertigungs- und/oder Passungstoleranzen, welche bei Verwendung unterschiedlicher Laschen in dem Kettenabschnitt stärker auftreten würden, minimiert werden und auch Längenabweichungen der verschiedenen Laschenstränge von der Solllänge geringer sind. Ferner wirken bei dieser geradlinigen Verfahrbewegung auch auf im mittleren Bereich der Kette angeordnete Kettenglieder geringere Querkräfte, also Kräfte quer zur Verfahrrichtung.

Die erfindungsgemäßen Vorteile insbesondere der weiteren Variante ergeben sich in besonderem Ausmaß, wenn die Befestigungsmittel der Laschen für Querstege und/oder Anschläge der Laschen und/oder Gelenkverbindungen, insbesondere auch die Gelenkelemente, einstückig an den Laschen angeformt sind. Vorzugsweise sind die Befestigungsmittel der Laschen für Querstege und die Anschläge der Laschen einstückig an den Laschen angeformt. Die verschiedenen Kettenglieder haben hierdurch eine besonders hohe Maßgenauigkeit, was sich insbesondere auch auf die Maß- und Passgenauigkeit der Verbindungen verschiedener Bauteile wie Lasche und Quersteg bzw. die Gelenkverbindungen und das Zusammenwirken derselben wie bspw. der Anschläge bezieht sowie auf Relation der Maßgenauigkeit verschiedener Laschen und Kettenglieder zueinander bezieht. Hierdurch resultiert auch eine besonders gleichmäßige Stabilität und Formgestalt der verschiedenen Kettenglieder des Kettenabschnittes, wodurch sich die erfindungsgemäßen Vorteile insbesondere der weiteren Variante in besonderem Ausmaß ergeben.

Vorzugsweise weist der jeweilige Anschlag, was besonders bevorzugt für sämtliche Anschläge der jeweiligen Lasche gilt, einen Anformungsbereich an der jeweilgen Lasche, beispielsweise einem Fortsatz derselben auf, wobei das dem Anformungsbereich gegenüberliegende freie Ende des Anschlages nicht durch einen anderen Bereich der jeweiligen Lasche überdeckt ist, welcher dauerhaft an der Lasche befestigt und somit nur unter Zerstörung von der Lasche entfernbar ist, wie dies für einen einstückig an der Laschen angefoemrten anderen Laschenbereich gilt. Vorzugsweise gilt die besagte fehlenden Überdeckung des freien Anschlagendes auch für lösbar oder lageveränderlich an der Lasche vorgesehene andere Bereiche. Die baugleichen Laschen mit den vorzugsweise einstückig angeformten Anschlägen sind hierdurch einfach zu einem Laschenstrang zusammenfügbar.

Die Kette ist bevorzugt unter Ausbildung zumindest zweier Trume wie Obertrum und Untertrums und eines Umlenkbereichs zwischen jeweils zwei Trumen angeordnet bzw. allgemein anordenbar. Die Endbereiche der Kette sind bevorzugt mit zwei relativ zueinander beweglichen Anschlussstellen unter Ausbildung der zumindest beiden Trumen, die jeweils mit einer Anschlussstelle verbindbar oder verbunden sind verfahrbar. Die Kette ist vorzugsweise geradlinig verfahrbar, also entlang eines geraden Verfahrweges.

Diese Verminderung der Toleranzen aufgrund der gemäß der weiteren Variante der Erfindung erfindungsgemäßen baugleicher Laschen ergibt sich dann auch bei der Verbindung der verschiedenen Bauteile der Kettenglieder miteinander, beispielsweise der Verbindung von Lasche und Quersteg oder Lasche und Gelenkelement oder bei der Bewegung benachbarter Laschen zueinander bei der Verfahrbewegung der Kette, beispielsweise bei zusammenwirkenden Anschlägen benachbarter Glieder oder wenn Laschenabschnitte benachbarter Laschen bei der Verfahrbewegung aneinander vorbeigeführt werden, wie beispielsweise von einem mittleren Laschenbereich in Laschenrichtung abragende Laschenfortsätze. Es hat sich im Zuge der Erfindung insbesondere gemäß der weiteren Variante herausgestellt, dass bei der Verfahrbewegung der Kette die verschiedenen Toleranzen im Befestigungsbereich der Laschen mit den Querstegen, dem Zusammenwirken benachbarter Anschläge und der Ausbildung der Gelenkverbindungen mit einer wechselwirken und zusammenwirken, um eine hinsichtlich Laufeigenschaften, insbesondere Verzug beim Verfahren, Abrieb und damit Lebensdauer der Kette optimale Kette bereitstellen zu können.

Der Kettenabschnitt mit mehreren benachbarten Kettengliedern, welcher gemäß der weiteren Variante durchgehend aus zueinander baugleichen Laschen aufgebaut, also durchgehend mit solchen baugleichen Laschen ausgebildet ist, kann sich über ≥ 5, vorzugsweise ≥ 10 oder ≥ 50 in Kettenlängsrichtung aufeinanderfolgende Kettenglieder oder Laschen erstrecken, besonders bevorzugt über die gesamte Länge des jeweiligen Laschenstranges der Energieführungskette.

Der besagte Kettenabschnitt aus zueinander baugleichen Laschen umfasst die zumindest zwei oder mehrere oder sämtliche der Laschenstränge der Energieführungskette. In dem besagten Kettenabschnitt verlaufen die genannten Laschenstränge in Kettenlängsrichtung, vorzugsweise nebeneinander und/oder parallel zueinander. Vorzugsweise sind mehrere oder sämtliche Laschenstränge des Kettenabschnittes miteinander durch zumindest einen oder mehrere Querstege miteinander verbunden, was vorzugsweise auch für jeweils paarweise nebeneinander angeordnete Laschenstränge gilt. In benachbarten Laschensträngen einander gegenüberliegend angeordneten Laschen in dem Kettenabschnitt sind jeweils durch zumindest einen oder vorzugsweise zwei oder gegebenenfalls mehr als zwei Querstege lösbar miteinander verbunden oder verbindbar, was vorzugsweise für sämtliche Laschen des Kettenabschnittes gilt. Die durch zumindest einen, vorzugsweise zumindest zwei Querstege miteinander verbundenen, in den benachbarten oder verschiedenen Laschensträngen angeordneten Laschen bilden jeweils ein Kettenglied aus. Der besagte Kettenabschnitt umfasst vorzugsweise ≥ 5 oder besonders bevorzugt ≥ 10 oder ≥ 50 in Kettenlängsrichtung aufeinanderfolgende Kettenglieder oder sämtliche Kettenglieder der Kette. Vorzugsweise jedes Kettenglied des Kettenabschnittes weist somit zumindest einen Quersteg auf, welcher an seinen beiden Endbereichen vorzugsweise lösbar mit Laschen verbunden ist, wobei diese Laschen Teil des Kettenabschnittes sind.

Der jeweilige Laschenstrang bzw. Strang von Kettengliedern der Kette ist an seinen beiden Endbereichen in der Regel mit Endbefestigungsteilen versehen, welche in Form von Laschen oder von Gliedern ausgebildet sein können. Diese Endbefestigungsteile können Befestigungsmittel aufweisen, um den jeweiligen Strang von Laschen oder Gliedern an einem Anschlusspunkt festzulegen, wobei zumindest einer oder beide der Anschlusspunkte beweglich und oftmals einer der beiden Anschlusspunkte ortsfest ist. Diese Endbefestigungsteile oder Endglieder können auch Zugentlastungsmittel zur zugentlastenden Befestigung der in der Kette geführten Leitungen aufweisen. Es versteht sich, dass diese Endbefestigungsteile oder Endglieder des Laschen- oder Kettengliederstranges nicht Teil des besagten Kettenabschnittes mit baugleichen Laschen sind. Diese Endbefestigungsteile oder Endglieder können aber Teil der erfindungsgemäßen Energieführungskette insbesondere gemäß der weiteren Variante sein. Der gemäß der weiteren Variante erfindungsgemäße Kettenabschnitt mit baugleichen Laschen kann sich somit vollständig zwischen den an gegenüberliegenden Enden der Kette angeordneten Endbefestigungsteilen oder Endgliedern der Kette erstrecken.

Dass die Laschenstränge "insgesamt" aus zueinander baugleichen Laschen aufgebaut sind bedeutet im Sinne der Erfindung gemäß der weiteren Variante, dass sämtliche der zumindest zwei oder mehr als zwei Laschenstränge, welche der Kettenabschnitt umfasst, vorzugsweise sämtliche der Laschenstränge der Kette, welche entlang des Kettenabschnittes verlaufen, aus baugleichen Laschen aufgebaut sind.

Dass die Laschenstränge "durchgehend" aus zueinander baugleichen Laschen aufgebaut sind bedeutet im Sinne der Erfindung gemäß der weiteren Variante, dass in Bezug auf den Abschnitt des jeweiligen Laschenstrang, welcher Teil des besagten Kettenabschnittes
ist, sämtliche der in Laschenstranglängsrichtung aufeinander folgen Laschen baugleich zueinander ausgebildet sind.

Vorzugsweise weisen die Laschen an beiden gegenüberliegenden Schmalseiten der Laschen Befestigungsmittel zur lösbaren Befestigung der Querstege auf ("Befestigungsmittel" genannt), wobei die Befestigungsmittel der jeweiligen Lasche für den oder die Querstege an den beiden Schmalseiten derselben vorzugsweise baugleich zueinander ausgebildet sind und vorzugsweise jeweils einstückig an der Lasche angeformt sind. Die Montage der Kettenglieder ist hierdurch vereinfacht und durch die einstückigen und baugleichen Laschen gemäß der weiteren Variante der Erfindung mit den Querstegbefestigungsmittel ergeben sich die genannten erfindungsgemäßen Vorteile wie verbesserte Laufeigenschaften der Kette. Die Laschen sind hierdurch bevorzugt ausgebildet, um wahlweise in verschiedenen Strängen der Kette einsetzbar zu sein. Die Befestigungsmittel der Lasche sind vorzugsweise im Querschnittsbereich der jeweiligen Lasche zwischen den beiden Seitenflächen derselben angeordnet. Seitlich von den Seitenflächen der Lasche abragende Befestigungsmittel oder andere seitlich von diesen abragende Bereiche werden vermieden bzw. sind vorzugsweise nicht gegeben. Hierdurch ist Verwendung baugleicher Laschen in den Laschensträngen erleichtert. Ferner ist das umhüllende Volumen der Laschen verringert und damit die Lagerhaltung derselben erleichtert.

Vorzugsweise sind die Laschenbefestigungsmittel für den zumindest einen Quersteg im Bereich von oder an zumindest einer oder beider der Laschenschmalseiten angeordnet und derart ausgebildet sind, dass der Quersteg wahlweise von der inneren Laschenseite abragend oder von der äußeren Laschenseite abragend an der Lasche befestigbar ist. Hierdurch können baugleiche Laschen in dem Kettenabschnitt wahlweise in einem der Laschenstränge angeordnet werden. Sind einem Laschenstrang zwei Laschenstränge benachbart angeordnet, so können die Laschen des mittleren Stranges wahlweise mit den jeweils baugleichen Querstegen mit einem der benachbarten Laschenstränge verbunden werden.

Vorzugsweise sind die Befestigungsmittel der Laschen für die Querstege in der Mittelebene der Laschen ausgebildet. Hierdurch ist der Aufbau der Laschenstränge des Kettenabschnittes durch baugleiche Laschen gemäß der weiteren Variante der Erfindung wesentlich vereinfacht, so dass diesbezüglich nicht auf die Orientierung der Lasche in dem jeweiligen Strang geachtet werden muss. Ferner werden hierdurch auch auf die Querstege einwirkende Kräfte, beispielsweise bei der Verfahrbewegung der Kette von dieser geführte Leitungen bei mit den Querstegen zur Anlage kommen, die entsprechenden Kräfte von dem Quersteg in die Mittelebene der Lasche überführt, sodass auch die Gelenkverbindungen zwischen den Laschen gleichmäßiger beansprucht werden, wodurch sich die Laufruhe der Kette verbessert und/oder Verschleiß bzw. Materialermüdungen der Gelenkverbindungen vermindern. Die Laschenmittelebene verläuft vorzugsweise parallel zu den beiden Seitenflächen der Laschen und weist zu diesen vorzugsweise jeweils den gleichen Abstand auf. Alternativ oder zusätzlich ist die Laschenmittelebene derart angeordnet, dass die an dem Dickstellenbereich der jeweiligen Lasche angeordneten von diesem Bereich in Laschenlängsrichtung abragenden Fortsätze und/oder die an den Laschen vorgesehenen Anschläge zur Zusammenwirkung mit benachbarten Laschen zur Begrenzung deren Gelenkbewegung relativ zueinander mit gleichem seitlichen Abstand zu der Laschenmittelebene angeordnet sind oder besonders bevorzugt an die Laschenmittelebene angrenzen.

Vorzugsweise sind die Querstege mittels Rast- und/oder Klemmverbindungen an den Laschen befestigt, sodass die Befestigungsmittel der Laschen für die Querstege in besonders einfacher Weise an den Laschen dauerhaft befestigt, insbesondere einstückig angeformt sein können, wodurch die Laschen einfach herstellbar und die Kettenglieder einfach zusammensetzbar sind. Die Laschenbefestigungsbereiche für die Querstege und die beiden Querstegendbereiche weisen hierzu korrespondierende Klemm- und/oder Rastmittel auf. Die Klemm- und/oder Rastmittel sind vorzugsweise in einer Aufnahmenut und/oder Klemmaufnahme für einen Querstegendbereich, welcher die korrespondierenden Klemm- und/oder Rastmittel aufweist, angeordnet, wobei die Aufnahmenut und/oder Klemmaufnahme der Lasche vorzugsweise an einer oder beiden Schmalseiten derselben angeordnet ist.

Die beiden Befestigungsbereiche an den Endbereichen der Querstege zur Verbindung mit den Laschen sind vorzugsweise baugleich ausgebildet und vorzugsweise einstückig an den Querstegen angeformt, wodurch separate Befestigungsmittel wie Schrauben oder dergleichen zur Festlegung der Querstege an den Laschen entbehrlich sind aber gegebenenfalls vorgesehen sein können. Derartige separate Befestigungsmittel erschweren auch die Montage und Demontage der Querstege und können bei dieser Handhabung auch verloren gehen. Beide Endbereiche der Querstege sind lösbar an den Laschen befestigbar. Die Querstege sind vorzugsweise nicht in an der jeweiligen Lasche festgelegtem Zustand gegenüber Lasche verschwenkbar, was die Stabilität des Kettengliedes erhöht und Abrieb bei dem Lösen oder Öffnen der Querstege vermindert. Dies gilt insbesondere für schmale Laschen, also geringer Länge derselben in Kettenlängsrichtung, was den Platzbedarf im Befestigungsbereich der Querstege an den Laschen vermindert aber engere Umlenkbereiche, d.h. kleiner Krümmungsradien, ermöglicht, was für viele Anwendungsfälle von Bedeutung ist. Gegebenenfalls kann eine solche Verschwenkbarkeit aber gegeben sein. Allgemein kann gegebenenfalls zwischen dem Querstegbefestigungsbereich und dem Laschenbefestigungsbereich auch ein Zwischenstück angeordnet sein, bspw. um die Ausbildung einer Klemmverbindung zwischen diesen zu erleichtern. Das Zwischenstück ist aber vorzugsweise derart ausgebildet, dass dieses bei der Demontage des Quersteges bestimmungsgemäß an dem Quersteg oder an der Lasche verbleibt und somit hierbei nicht als separates Bauteil anfällt oder als ein solches zu handhaben ist.

Vorzugsweise weist die Lasche an den beiden Laschenendbereichen, welche in Längsrichtung des jeweiligen Laschenstranges angeordnet sind, jeweils zumindest eine oder genau eine Gelenkverbindung auf, so dass diese mit jeweils einer in Laschenstranglängsrichtung benachbarten Lasche gelenkig verbunden oder verbindbar ist. Die jeweilige Gelenkverbindung der Lasche kann als Aufnahme für ein separates Gelenkelement dienen. Die Aufnahme ist vorzugsweise derart ausgebildet, dass das Gelenkelement kraft- und/oder formschlüssig und/oder stoffschlüssig in der Aufnahme angeordnet und verliersicher in dieser gehaltert ist. Das Gelenkelement ist vorzugsweise in Kettenlängsrichtung zugkraftaufnehmend in der Aufnahme angeordnet oder allgemein zugkraftaufnehmend an der Lasche gehaltert. Das Gelenkelement kann zumindest zwei Verbindungsbereiche aufweisen, welche bei Anordnung des Gelenkelementes an dem Laschenstrang in Laschenstranglängsrichtung voneinander beabstandet sind, wobei jeweils ein Verbindungsbereich des Gelenkelementes mit einer der beiden in Laschenstranglängsrichtung benachbarten Lasche ankoppelt, um die Gelenkverbindung auszubilden. Das jeweilige Gelenkelement kann auch dauerhaft an der Lasche befestigt sein, beispielsweise durch Verkleben, oder bevorzugt einstückig an der Lasche angeformt sein, beispielsweise im Spritzgussverfahren oder im Zwei-Komponenten-Spritzgussverfahren, wodurch sich die erfindungsgemäßen Vorteile in besonderer Weise ergeben. Allgemein im Rahmen der Erfindung kann das Material des Gelenkelementes von dem Material der Lasche bzw. des Dickstellenbereichs der Lasche unterschiedlich sein. An einem Endbereich der Lasche in Bezug auf die Kettenlängsrichtung kann somit zumindest ein Gelenkelement angeordnet sein und an dem anderen Laschenendbereich in Bezug auf die Kettenlängsrichtung kann zumindest eine Aufnahme für das Gelenkelement der benachbarten Lasche vorgesehen sein, wobei gegebenenfalls an einem Laschenendbereich auch sowohl ein Gelenkelement und eine Gelenkaufnahme zur Ankoppelung an Gelenkelement und Aufnahme der jeweils benachbarten Lasche vorgesehen sein können. An einem Endbereich der Lasche in Bezug auf die Kettenlängsrichtung können nur zumindest ein oder mehrere Gelenkelemente und an dem anderen Laschenendbereich in Kettenlängsrichtung können nur zumindest eine oder mehrere Aufnahmen für das/die Gelenkelement/e der benachbarten Lasche vorgesehen sein. Gegebenenfalls können auch an beiden Endbereichen der Lasche Gelenkelemente vorgesehen sein, sodass zur Verbindung benachbarter Laschen das Gelenkelement einer Lasche bzw. das an einem Endbereich angeordnete Gelenkelement der jeweiligen Lasche mit dem Gelenkelement der benachbarten Lasche bzw. dem Gelenkelement an dem gegenüberliegenden Endbereich der jeweiligen Lasche gelenkig verbindbar ist, vorzugsweise in Kettenlängsrichtung auch zugkraftaufnehmend verbindbar ist. Jeweils benachbarte Laschen sind vorzugsweise nur durch eine Gelenkverbindung, gegebenenfalls auch durch mehrere Gelenkverbindungen miteinander gelenkig verbunden. Die jeweilige Aufnahme der Lasche für das Gelenkelement ist vorzugsweise an dem Laschenkorpus dauerhaft befestigt oder einstückig an diesem angeformt und/oder aus dem Material des Laschenkorpus herausgearbeitet, um eine einstückige Verbindung mit dem Laschenkorpus auszubilden, wodurch sich die erfindungsgemäßen Vorteile in besonderer Weise ergeben, insbesondere auch in Bezug auf die Laufruhe und Abrieb bei Verfahrung der Kette.

Die erfindungsmäße Ausbildung der Gelenkverbindung ist besonders vorteilhaft in Kombination mit der erfindungsgemäßen Ausbildung der Laschenbefestigungsmittel für die Querstege und/oder der Laschenanschläge insbesondere gemäß der weiteren Variante der Erfindung. Benachbarte Kettenglieder weisen aufgrund der baugleichen Ausgestaltung der Querstegbefestigungsmittel in ihrer Gesamtgestalt besonders geringe Fertigungs- und Passungstoleranzen auf, insbesondere auch in Bezug auf die Länge der Laschen in Kettenlängsrichtung und auch in Bezug auf den Abstand der Querstegbefestigungsmittel in Bezug auf die Laschenhöhe, wobei die Laschenhöhe der Abstand der beiden Laschenschmalseiten senkrecht zur Kettenlängsrichtung darstellt. Durch die besonders exakte Formgestalt der Kettenglieder werden die Gelenkverbindungen auch bei der Verfahrbewegung der Energieführungskette mechanisch weniger belastet, was zu geringeren Belastungen und Ermüdungserscheinungen der Gelenkelemente führt.

Vorzugsweise sind die Laschen und Gelenkverbindungen und/oder Gelenkelemente derart ausgebildet, dass die Gelenkverbindungen und/oder Gelenkelemente bei der Verfahrbewegung der Kette eine Deformation erfahren, vorzugsweise eine Deformation wie eine Biege- und/oder Torsionsdeformation und/oder eine Längendehnung. Eine Biegedeformation ist aufgrund der Kraftübertragung zwischen den Laschen bei der Gelenkbewegung der Laschen bevorzugt. Das Gelenkelement kann auch zumindest im Wesentlichen keine Längendehnung bei der Gelenkbewegung erfahren. Das Gelenkelement kann hierbei elastisch verbiegbar oder gegebenenfalls auch plastisch verbiegbar oder biegeschlaff sein. Bei elastischer Deformation des Gelenkelementes aufgrund der Gelenkbewegung kann dieses eine Rückstellkraft in Richtung auf die Ausgangsstellung der Laschen ausüben. Die Kette ist hierdurch für Reinraumbedingungen besonders geeignet. Loch-Zapfenverbindungen, welche zu erhöhtem Abrieb führen, werden hierdurch vermieden.

Vorzugsweise sind die Gelenkverbindungen der Laschen an deren Stirnseiten angeordnet. Hierdurch sind die Laschen besonders einfach wahlweise in verschiedenen Laschensträngen einsetzbar. Die Laschenstirnseite kann hierbei auch die Stirnseite des Dickstellen- oder Zentralbereichs der Lasche darstellen, von welchem zumindest ein oder mehrere Fortsätze in Laschenlängsrichtung abragen. Die stirnseitigen Gelenkverbindungen können jeweils eine Aufnahme für ein Gelenkelemente einer benachbarten Laschen oder ein Gelenkelement aufweisen. Die Gelenkelemente können hierbei die Breite der Laschen bzw. des Dickstellen- oder Zentralbereichs derselben aufweisen oder auch eine geringere Breite wie beispielsweise kleiner/gleich der halben Laschenbreite, sodass an einer Gelenkverbindung zwischen benachbarten Laschen zwei Gelenkelemente vorgesehen sein können, welche jeweils an einer der beiden Laschen befestigt sein können, bevor gemäß der weiteren Variante der Erfindung die baugleichen Laschen miteinander zusammengesetzt werden.

Die Gelenkverbindungen der Laschen können gegebenenfalls auch an Fortsätzen der Laschen ausgebildet sein, welche bei in dem Laschenstrang benachbarten Laschen einander seitlich überlappen und an dem Dickstellen- oder Zentralbereich der jeweiligen Lasche angeordnet sein können. Beispielsweise kann hierzu an dem jeweiligen Laschenfortsatz zumindest ein oder mehrerere seitlich abragende Gelenkelemente vorgesehen sein, welche beispielsweise in Quersteglängsrichtung von der jeweiligen Lasche abragen. Der überlappende Gelenkbereich der benachbarten Aufnahme kann eine korrespondierende Aufnahme für dieses Gelenkelement aufweisen. Es können auch an beiden Laschenfortsätzen Gelenkelemente vorgesehen sein, welche zur Ausbildung der Gelenkverbindung miteinander verbindbar oder verbunden sind. Es kann auch benachbart zu dem Gelenkelement an einem Laschenfortsatz eine Aufnahme für das Gelenkelement des seitlich überlappenden Fortsatzes der benachbarten Lasche zur Ausbildung der Gelenkverbindung vorgesehen sein, wobei die Gelenkelemente vorzugsweise deformierbar bzw. elastisch deformierbar, gegebenenfalls auch vorzugsweise elastisch längenveränderlich sind, um in die Aufnahme des Fortsatzes der benachbarten Lasche eingreifen zu können, so dass die Laschen gemäß der weiteren Variante der Erfindung auch rotationssymmetrisch sein können, wie unten beschrieben. Eine derartige Gelenkverbindung kann beispielsweise in Art eines Torsionsgelenkes wirken, ohne hierauf beschränkt zu sein. Die Gelenkelemente können jeweils dauerhaft an den Laschen befestigt oder vorzugsweise einstückig an diesen angeformt sein.

Mit der Anordnung baugleicher Laschen sind erfindungsgemäß gemäß der weiteren Variante auch die Anschläge der Laschen zur Zusammenwirkung mit den Anschlägen benachbarter Laschen baugleich ausgebildet und die Laschen in Bezug die Ausbildung und Anordnung der Anschläge baugleich ausgebildet. Hierdurch kann gemäß der weiteren Variante die jeweilige Lasche mit den Anschlägen in dem genannten Kettenabschnitt wahlweise in einem der zumindest zwei Laschenstränge angeordnet werden. Durch die baugleiche Ausgestaltung der Anschläge der Laschen verschiedener Stränge gemäß der weiteren Variante werden Fertigungstoleranzen der Laschen vermindert was zu einer erhöhten Laufruhe und geringer Materialermüdung der Ketteglieder und deren Gelenkbereichen führt, wobei die Laschen auch baulich einfach ausgebildet sind. Dies hat auch einen besonderen Vorteil in Bezug auf die Wechselwirkung der Anschläge mit den Gelenkverbindungen und/oder der Befestigung der Querstege an den Laschen. Beim Auftreffen der Anschläge benachbarter Laschen aneinander unter Begrenzung der Gelenkbewegung werden auf die Laschen und die Kettenglieder insgesamt Kräfte ausgeübt, welche auch auf die Gelenkverbindungen und die Befestigungsbereiche der Laschen mit den Querstegen einwirken. Beim Aufeinandertreffen der Anschläge benachbarter Laschen aufeinander wirken somit zum einen Rückprallkräfte, zum anderen kann es, wenn die Anschläge nicht exakt ausgebildet und/oder an der jeweiligen Lasche positioniert sind, zu einem gewissen Versatz der beiden mit den Anschlägen versehenen Laschen kommen. Dies kann zu einer erhöhten Belastung der Gelenkverbindungen und/oder der Befestigungsmittel der Laschen für die Querstege und zu Materialermüdungen führen und die Laufruhe der Kette beeinträchtigen. Durch die baugleiche Ausgestaltung der Anschläge an den Laschen gemäß der weiteren Variante welche somit wahlweise in einem der zumindest beiden Laschenstränge anordenbar sind, werden derartige Nachteile insbesondere durch verbesserte Fehlertoleranzen minimiert.

Bevorzugt treffen die Anschläge bei Begrenzung der Gelenkbewegung, etwa Begrenzung des Verschwenkwinkels, aufeinander, vorzugsweise unmittelbar.

Die Anschläge der Laschen können jeweils zumindest teilweise an oder im Bereich des Dickstellenbereichs der jeweiligen Lasche und/oder an Laschenfortsätzen angeordnet sein, welche sich von dem Dickstellen- oder Zentralbereich der Laschen in Laschen- bzw. Kettenlängsrichtung wegerstrecken. Der Anschlag einer ersten Lasche kann hierbei beispielsweise in einer Ausnehmung des Fortsatzes der jeweils benachbarten Lasche eingreifen. Diese Ausnehmung kann bevorzugt auch als Tasche oder Anschlagtasche bezeichnet werden.

Vorzugsweise sind die Laschenseitenflächen parallel zueinander ausgerichtet. Vorzugsweise sind hierzu alternativ oder zusätzlich die innere und die äußere Laschenseitenfläche eben und besonders bevorzugt glattwandig, also ohne vorspringende Bereiche ausgebildet, was aber einschließt, dass an den Seitenflächen Vertiefungen vorgesehen sein können. Vorzugsweise sind hierzu alternativ oder zusätzlich die Befestigungsmittel der Laschen für den zumindest einen oder sämtliche Querstege, die Gelenkverbindungen zur gelenkigen Verbindung benachbarter Laschen und die Anschläge zu Begrenzung der Gelenkbewegung benachbarter Laschen vollständig zwischen den Laschenseitenflächen angeordnet, stehen also nicht von diesen in den Aufnahmeraum der Leitung/en hin vor. Vorzugsweise sind die oben genannten Merkmale sämtliche in Kombination miteinander verwirklicht. Durch die ebenen, glatten Seitenflächen werden zum einen bei der Verfahrbewegung der Kette die Leitungen besonders geschont, wenn diese mit den Seitenflächen zur Anlage kommen, was deren Lebensdauer erhöht und Abrieb vermindert. Der Laschenstrang hat hierdurch zumindest im Wesentlichen über seine Länge eine durchgehend ebene Innen- bzw. Außenseite. Zum anderen sind die Laschen als plattige Bauteile hierdurch leicht und bei gegebener Laschenanzahl mit geringer Stapelhöhe, jeweils mit den Seitenflächen aufeinanderliegend, stapelbar. Das verminderte Stapelvolumen vermindert allgemein den Platz der Bevorratung der Laschen, insbesondere aber auch in einem Magazin, in welchem die Laschen zur Montage der Kette bevorratet werden, beispielsweise bei einer automatisierten Kettenmontage durch Roboter oder Maschinen. Die Laschen sind hierdurch auch besonders einfach aus dem Bevorratungsstapel oder Magazin vereinzelbar, was eine zuverlässige und schnelle Montage der Kette erleichtert.

Vorzugsweise werden die Kettenglieder des genannten Kettenabschnitte bzw. die Energieführungskette insgesamt lediglich durch die Laschen, Querstege und gegebenenfalls separate Gelenkelemente aufgebaut, sodass also sämtliche Befestigungsmittel für die genannten Bauteile vorzugsweise aneinander einstückig an den jeweils korrespondierenden Bauteilen angeformt sind und weitere Befestigungsmittel vorzugsweise nicht vorhanden sind. Besonders bevorzugt sind die Gelenkelemente mit den Laschen dauerhaft verbunden oder einstückig an diesen angeformt. Zwischen den Querstegbefestigungsbereichen und den Laschenbefestigungsbereichen für die Querstege können gegebenenfalls Zwischenteile angeordnet sein, wie beschrieben, oder solche sind nicht vorhanden. Der Aufbau der Kette aus den einzelnen Bauteilen ist hierdurch wesentlich vereinfacht und etwaige Fertigungs- und/oder Passungstoleranzen zwischen den Bauteilen werden vermindert, was die Laufeigenschaften der Kette bei deren Verfahrbewegung verbessert und Materialermüdungen verringert.

Vorzugsweise sind die Laschen derart ausgebildet, dass der mittlere Bereich der jeweiligen Lasche in Bezug auf die Längserstreckung derselben als Dickstellenbereich ausgebildet ist, welcher die Breite der Lasche bestimmt oder wesentlich mitbestimmt. Der Dickstellenbereich stellt somit jeweils den Zentralbereich der Lasche in Bezug auf deren Längserstreckung, also Ausdehnung in Laschenstranglängsrichtung, dar. An diesem Dickstellenbereich der Lasche sind vorzugsweise die Befestigungsmittel der Lasche zur Befestigung des zumindest einen oder mehreren Querstege an der Lasche vorgesehen, die hier besonders stabil ausführbar sind. Von dem Dickstellenbereich der Lasche gehen vorzugsweise sich in Laschenlängsrichtung erstreckende Fortsätze ab, welche zumindest im Wesentlichen plattenförmig ausgebildet sein können. Die der Laschenmittelebene jeweils abgewandte Seitenfläche des jeweiligen Fortsatzes kann jeweils Teil einer Seitenfläche der jeweiligen Lasche sein. Der Dickstellenbereich weist hierbei eine größere Dicke oder Materialstärke auf als die Fortsätze. Die Gelenkverbindung ist jeweils vorzugsweise in Bezug auf die Höhe der Lasche, also in Bezug auf den Abstand der beiden einander gegenüberliegenden Schmalseiten, von beiden Schmalseiten der Lasche beabstandet, vorzugsweise im mittleren Höhenbereich der Lasche angeordnet. Gegebenenfalls kann jedoch die Gelenkverbindung auch im Bereich einer der Schmalseiten der Lasche angeordnet sein. Die Fortsätze können an dem jeweiligen Laschenendbereich jeweils beidseitig der Gelenkverbindung angeordnet sein, in Bezug auf die jeweils gegebene Lage der Lasche einer der Laschenfortsätze "oberhalb" und der andere Laschenfortsatz "unterhalb" der Gelenkverbindung. In der gegebenen Lage der Lasche kann in Bezug auf die beiden Laschenendbereiche in Bezug auf die oberhalb des Gelenkbereichs angeordneten Fortsätze einer derselben an der Lascheninnenseite bzw. inneren Laschenseitenfläche und der andere an der äußeren Laschenaußenseite bzw. äußeren Laschenseitenfläche angeordnet sein. Dies kann entsprechend auch für die unterhalb der Gelenkverbindung angeordneten Laschenfortsätze gelten, wobei an einem Laschenendbereich einer der Fortsätze an der inneren bzw. ersten Laschenseitenfläche und der andere Fortsatz an der äußeren bzw. zweiten Laschenseitenfläche angeordnet sind, so dass benachbarte Laschen mit ihren Fortsätzen sozusagen verschränkt sind. Alternativ können sich die Laschenfortsätze an den beiden Laschenendbereichen jeweils auch über zumindest im Wesentlichen die gesamte Höhe der Lasche erstrecken und an dem einem Laschenendbereich der Laschenfortsatz an der inneren Laschenseitenfläche angeordnet sein und an dem gegenüberliegenden Laschenendbereich der Laschenfortsatz an der äußeren Laschenseitenfläche angeordnet sein, sodass eine sogenannte gekröpfte Lasche gegeben ist. Die Fortsätze an den beiden einander zugewandten Laschenendbereichen der beiden benachbarten Laschen bei miteinander verschränkten oder gekröpften Laschen übergreifen einander seitlich bei den im Laschenstrang angeordneten Laschen. Die Anschläge der Laschen zur Begrenzung der Gelenkbewegung gegenüber einer benachbarten Lasche sind vorzugsweise zumindest teilweise oder vollständig an den beschriebenen Laschenfortsätzen angeordnet, wobei vorzugsweise ein seitlich von einem Laschenfortsatz abragender Vorsprung einer Lasche in eine Ausnehmung eines Fortsatzes einer benachbarten Lasche eingreift. "Abragend" sei allgemein im Sinne von "abstehend" verstanden. Bei miteinander verschränkten Laschen weist der Laschenstrang eine besonders hohe Stabilität gegenüber Kräften quer zum Laschenstrang auf, und die Kette damit besonders gute Laufeigenschaften. Derartige verschränkte bzw. gekröpfte Laschen sind besonders geeignet, um gemäß der weiteren Variante der Erfindung als baugleiche Laschen verschiedene Laschenstränge eines Kettenabschnittes aufzubauen bzw. entsprechende Laschenstränge desselben auszubilden.

Vorzugsweise sind gemäß der weiteren Variante der Erfindung die baugleichen Laschen des Kettenabschnittes derart ausgebildet, dass in benachbarten Laschensträngen einander gegenüberliegende Laschen durch translative Verschiebung aufeinander abbildbar sind. Dies heißt, dass in den benachbarten Laschensträngen benachbart angeordnet Laschen sich lediglich durch die translative Verschiebung voneinander unterschieden und ansonsten die gleiche Orientierung bzw. Ausrichtung im Laschenstrang zu benachbarten Laschen aufweisen, und dass die jeweilige Lasche bzw. die baugleichen Laschen des Kettenabschnittes hierfür geeignet ausgebildet sind. Dies kann für alle Laschen des Kettenabschnittes gelten. Der Kettenabschnitt ist gemäß der weiteren Variante hierdurch besonders einfach durch baugleiche Laschen aufbaubar und die Laschenstränge besonders einfach zusammensetzbar. Die nebeneinander angeordneten Laschenstränge sind gemäß der weiteren Variante somit baugleich und haben in der Kette dieselbe Ausrichtung. Hierdurch ergeben sich die erfindungsgemäßen Vorteile gemäß der weiteren Variante in besonderer Weise.

Vorzugsweise sind gemäß der weiteren Variante die baugleichen Laschen des Kettenabschnittes derart ausgebildet, dass die Laschen in sich rotationssymmetrisch sind, und zwar derart, dass die jeweilige Lasche unter Rotation - um bevorzugt 180° - um eine Achse, welche senkrecht zur Längsrichtung der Lasche und zumindest im Wesentlichen parallel zu den Laschenseitenflächen verläuft und welche vorzugsweise in der Mittelebene der Lasche verläuft, auf sich selbst abbildbar ist. Die in benachbarten Laschensträngen einander gegenüberliegenden Laschen können hierbei derart angeordnet sein, dass ausgehend von einer Lasche eines Stranges die gegenüberliegende Lasche des benachbarten Stranges um 180° um die Rotationsachse verdreht angeordnet ist. Zum einen ist der Laschenstrang hierdurch besonders einfach aufbaubar, da beim Zusammenfügen des Laschenstranges aus den Laschen nicht auf deren Ausrichtung in Bezug auf die Rotationsebene zu achten ist. Ferner ist auch der benachbarte Laschenstrang besonders einfach aufbaubar, da auch hier nicht auf die Rotationsausrichtung der jeweiligen Laschen geachtet werden muss. Der Aufbau der gesamten Kette ist hierdurch wesentlich vereinfacht, insbesondere auch, wenn diese mehr als zwei Laschenstränge umfasst.

Die Ausbildung der Laschen, dass diese durch translative Verschiebung aufeinander abbildbar sind und/oder rotationsymmetrisch ausgebildet sind, bezieht sich jeweils insbesondere auch auf die Ausbildung der Befestigungsmittel der Laschen für den zumindest einen oder mehrere Querstege, die Gelenkverbindungen zur gelenkigen Verbindung benachbarter Laschen miteinander und die Anschläge der Laschen zur Begrenzung der Gelenkbewegung benachbarten Laschen. Die erfindungsgemäßen Vorteile insbesondere gemäß der weiteren Variante ergeben sich hierdurch in besonderer Weise. Gegebenenfalls können andere bauliche Merkmale der Laschen von der genannten translativen Abbildbarkeit und/ oder Rotationssymmetrie der Laschen verschieden angeordnet, wie beispielsweise die Anordnung von Dämpfungselementen oder von Bereichen der Laschen, welche die Funktionalität der Laschen nicht beeinträchtigen. Vorzugsweise betrifft die translativen Abbildbarkeit und/oder Rotationssymmetrie der Laschen jedoch die jeweilige Lasche in ihrer Gesamtheit, so dass gemäß der weiteren Variante beispielsweise alle Laschen des Kettenabschnittes in demselben Formungswerkzeug wie z.B. Spritzgusswerkzeug hergestellt sein können bzw. hergestellt sind.

Vorzugsweise weisen die Laschen Dämpfungselemente auf, welche zur Anschlagdämpfung beim Anschlag benachbarter Laschen eines Laschenstranges aneinander ausgebildet sind. Das oder die Dämpfungselemente der jeweiligen Lasche können hierbei beispielsweise elastisch deformierbare Bereiche aufweisen. Die Dämpfungselemente können beispielsweise komprimierbar ausgebildet sein, wie beispielsweise in Art eines Schaumstoffes oder deformierbar ausgebildet sein wie in Art einer Federzunge, ohne hierauf beschränkt zu sein. Die Dämpfungselemente an den Laschen sind vorzugsweise derart angeordnet und ausgebildet, dass die jeweilige Lasche erfindungsgemäß wahlweise in einem der verschiedenen Laschenstränge der Kette einsetzbar ist.

Die Ansprüche 34 bis 38 beschreiben eine weitere besonders vorteilhafte Ausführungsform der weiteren Variante einer erfindungsgemäßen Energieführungskette. Hierbei weist die Kette zumindest drei oder mehr in Kettenlängsrichtung verlaufende, seitlich zueinander beabstandete Laschenstränge auf, wobei der Kettenabschnitt mit insgesamt durchgehend baugleichen Laschen sich über die zumindest drei oder sämtliche der benachbarten Laschenstränge erstreckt. Die drei oder mehr Laschenstränge sind hierbei somit ausschließlich aus baugleichen Laschen aufgebaut. In Bezug auf die Ausgestaltung der Laschen sei auf die übrigen Ausführungen zu dieser Erfindung verwiesen. Die erfindungsgemäßen Vorteile ergeben sich hierbei in besonderer Weise, da bei drei oder mehr Laschensträngen Abweichungen in die Maßungenauigkeit der Laschen eines Laschenstranges Auswirkungen in Bezug auf die Laufruhe eines übernächsten oder weiter entfernten Laschenstranges haben, da die Bewegung der Laschen eines Laschenstranges über die die Stränge verbindenden Querstege auch auf den übernächsten Strang usw. übertragen werden aber der jeweils benachbarte Strang den entsprechenden Kräften aufgrund der Maßungenauigkeit nicht durch eine Deformation der Kette ausgleichen kann, was durch den weiter entfernten Strang eben behindert wird. Die Verwendung baugleicher Lachen gemäß der weiteren Variante der Erfindung in den drei oder Strängen ist somit besonders vorteilhaft.

Hierbei ist somit jeweils auch ein mittlerer Laschenstrang, genannt "zweiter Laschenstrang", vorgesehen, an welchem beidseitig jeweils ein anderer Laschenstrang, genannt "erster Laschenstrang" bzw. "dritter Laschenstrang", vorgesehen ist. Die genannten zumindest drei Laschenstränge können parallel in Kettenlängsrichtung verlaufen. Die Seitenflächen der genannten zumindest drei Laschenstränge können parallel zueinander angeordnet sein. Durch Verwendung ausschließlich baugleicher Laschen in den drei oder mehr Laschensträngen gemäß der weiteren Variante der Erfindung ist die Energieführungskette besonders einfach in ihrer Breite erweiterbar, nämlich durch Anordnung jeweils eines zusätzlichen Laschenstranges. Insbesondere können auch die mehreren oder sämtliche der Laschenstränge dieser Kette baugleich zueinander ausgebildet sein. Die jeweiligen Laschenstränge sind jeweils durch mehrere Querstege miteinander verbunden, welche jeweils an Laschen unterschiedlicher Laschenstränge ankoppeln bzw. an den Laschen derselben befestigt sein können, wobei nicht sämtlichen Querstegbefestigungsmittel aller Laschen des Kettenabschnittes mit Querstegen zusammenwirken bzw. zusammenwirken müssen. Die Querstege können derart ausgebildet sein, dass diese Laschen in zueinander benachbarten Laschensträngen verbinden. Gegebenenfalls können auch alternativ oder zusätzlich Querstege vorgesehen sein, welche eine größere Länge aufweisen und somit beispielsweise die Laschen von drei oder mehr Laschensträngen miteinander verbinden, wodurch die Montage der Kette insgesamt vereinfacht wird. Werden andererseits jedoch die Laschenstränge durch Querstege miteinander verbunden, welche jeweils nur zwei Laschen der zueinander benachbarten Laschenstränge verbinden, so ist dies fertigungs- und handhabungstechnisch einfacher.

Insbesondere sind auch bei dieser Ausführungsform mit drei oder mehr Strängen die Laschen derart ausgebildet, dass an diesen wahlweise Querstege befestigbar sind, welche wahlweise zu der einen oder der anderen Seitenfläche der Lasche abragen und mit baugleichen Laschen eines anderen Laschenstranges befestigbar sind, wobei die Laschen der unterschiedlichen Laschenstränge jeweils den gleichen seitlichen Abstand zueinander aufweisen.

Weiterhin wird gemäß der weiteren Variante erfindungsgemäß eine Seitenlasche einer Energieführungskette bereitgestellt, mittels welcher unter zusätzlicher Verwendung von Querstegen und gegebenenfalls auch separaten Gelenkelementen, gegebenenfalls aber auch ohne zusätzliche separate Gelenkelemente, eine erfindungsgemäße Energieführungskette aufbaubar ist.

Ferner betrifft die Erfindung gemäß der weiteren Variante ein Verfahren zur Herstellung einer erfindungsgemäßen Energieführungskette, bei welchem die Laschen der zumindest zwei oder sämtlicher der Laschenstränge des Kettenabschnittes mit ein und demselben Formgebungswerkzeug, insbesondere Spritzgusswerkzeug, hergestellt sind. Die Laschen sind vorzugsweise als Kunststoffteile, insbesondere Kunststoffspritzgussteile ausgebildet.

Die Merkmale aller drei Aspekte, d.h. insbesondere Merkmale der Ansprüche 1-19, Merkmale der Ansprüche 20-24 und Merkmale der Ansprüche 25-39 sind im Rahmen der Erfindung zunächst unabhängig offenbart und beansprucht, jedoch erkennbar auch miteinander kombinierbar. So können z.B. die Merkmale der Unteransprüche 26-39 auch, soweit kompatibel, für den ersten Aspekt nach den Ansprüchen 1-19 vorteilhaft sein und umgekehrt. Sämtliche Merkmale der in den Figuren gezeigten einzelnen Ausführungsbeispiele sind auch im Zusammenhang mit jedem anderen Ausführungsbeispiel als offenbart zu sehen, sofern dies nicht in Widerspruch zu einander steht. Sämtliche Merkmale des jeweiligen Ausführungsbeispiels bzw. der jeweiligen weiter oben dargestellten Aspekte und Ausführungsform sind unabhängig voneinander jeweils für sich genommen oder in Kombination miteinander, auch in Kombination mit Merkmalen anderer Aspekte, Ausführungsbeispiele bzw. Ausführungsformen, allgemein als Merkmale der Erfindung offenbart.

Weitere Einzelheiten, Vorteile und Merkmale der Erfindung lassen sich, ohne Beschränkung der Allgemeinheit der vorstehenden Beschreibung, dem nachfolgenden Teil der Beschreibung entnehmen, in welchem ein Ausführungsbeispiel anhand der beigefügten Zeichnungen näher erläutert wird.

Es zeigen
- FIG.1:: eine perspektivische Teilansicht eines Ausführungsbeispiels einer erfindungsgemäßen Energieführungskette;
- FIG.2A-2D:: Seitenansichten einer sog. Außenlasche (FIG.2A-2B) bzw. Front- u. Perspektivansichten eines Kettenglieds aus zwei Außenlaschen und diese verbindenden Querstegen (FIG.2C-2D);
- FIG.3A-3D:: Seitenansichten einer sog. Innenlasche (FIG.3A-3B) bzw. Perspektivansichten von deren Innen- und Außenseiten (FIG.3C-3D);
- FIG.4:: eine vergrößerte Draufsicht auf einen Laschenstrang aus FIG.1, in Ansicht von radial Außen bzgl. des Umlenkbogens;
- FIG.5A-5B:: eine Seitenansicht und eine Perspektivansicht eines Gelenkverbinders gemäß einem unabhängigen für sich als erfinderisch beanspruchten Aspekt der Erfindung;
- FIG.6A-6C:: Ansichten einer rotationssymmetrischen Seitenlasche bzw. eines Kettenglieds mit zwei baugleichen solchen Laschen für ein weiteres, zweites Ausführungsbeispiels einer erfindungsgemäßen Energieführungskette, wie in DE 20 2020 103 046.9 beschrieben;
- FIG.7A-7G:: ein Kettenglied einer erfindungsgemäßen Energieführungskette in perspektivischer Ansicht (FIG. 7A), in Frontalansicht (FIG. 7B), in Draufsicht (FIG. 7C), entlang des Schnittes B-B der FIG. 7B (FIG. 7D), eine Seitenansicht des Kettengliedes nach FIG. 7A (FIG. 7E), eine Detailansicht der FIG. 7E (FIG. 7F), eine Schnittdarstellung des Verbindungsbereichs zwischen Quersteg und Lasche (FIG. 7G),
- FIG.8A-8C:: eine Energieführungskette aus Kettengliedern gemäß FIG.7 in Draufsicht (FIG. 8A), in Seitenansicht (FIG. 8B) und in perspektivischer Ansicht (FIG. 8C),
- FIG.9A-9C:: eine Weiterbildung der Energieführungskette gemäß FIG.8C mit mehr als zwei parallel zueinander angeordneten Laschensträngen und diese verbindenden Querstegen in Draufsicht (FIG.9A) in Seitenansicht (FIG.9B) und in perspektivischer Darstellung (FIG.9C),
- FIG.10A-10B:: schematische Darstellungen verschiedener Gelenkverbindungen benachbarter Laschen auf Höhe der Gelenkverbindung (FIG.10A, 10B).

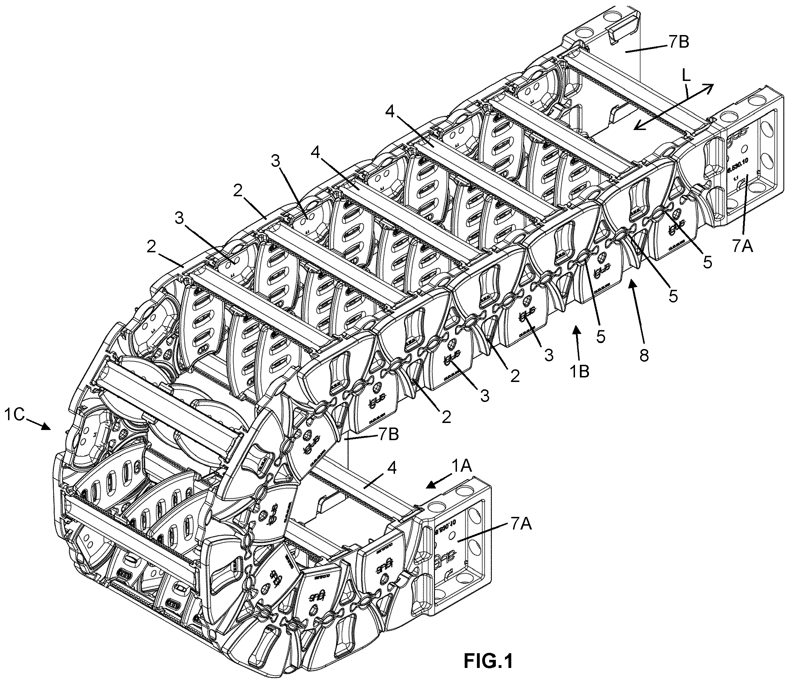

FIG.1 zeigt in perspektivischer Darstellung eine erfindungsgemäße Energieführungskette 1. Die Energieführungskette 1 ist aus einer Vielzahl gelenkartig zueinander abwinkelbar miteinander verbundenen Seitenlaschen 2, 3 aufgebaut. Die Seitenlaschen 2, 3 sind zu zwei parallelen und durch obere und untere Querstege 4, hier lösbar, verbundene Laschensträngen zusammengesetzt. Zwischen den Laschensträngen aus in Längsrichtung L aufeinanderfolgenden Seitenlaschen 2, 3 und den Querstegen 4 bildet die Energieführungskette 1 einen inneren Aufnahmeraum, welcher als Führungskanal z.B. für Leitungen oder Schläuche dient.

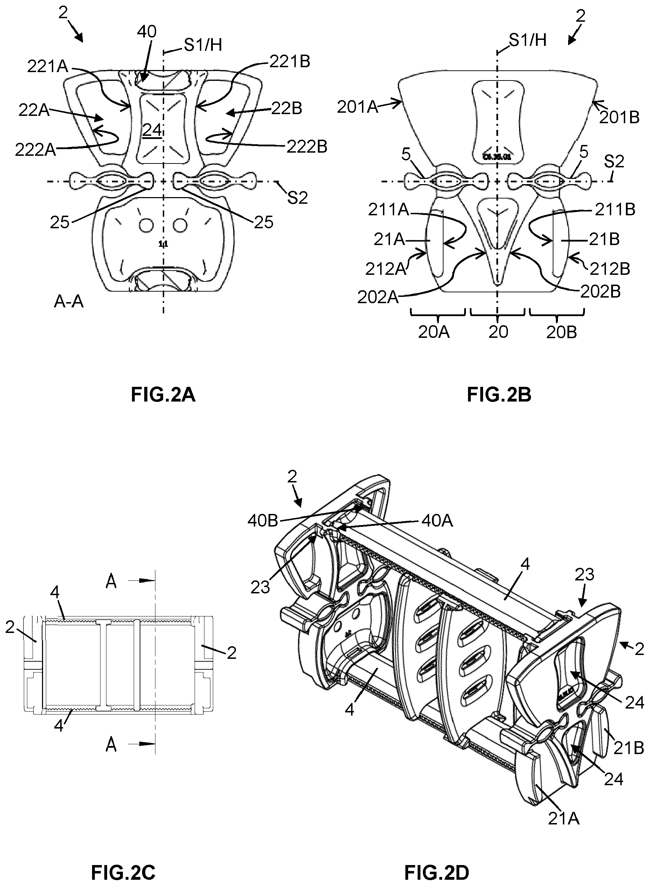

Durch den Satz Einzelteile bestehend aus zwei parallel gegenüberliegenden Seitenlaschen 2, 3 und ggf. zwei zugehörigen Querstege 4 sowie die Seitenlaschen 2, 3 verbindende Gelenkverbinder 5 werden formstabile, ggf. verdreh- und torsionssteife Kettenglieder, vgl. z.B. FIG.2D, als kleinste sich wiederholende Ketteneinheit gebildet.

Die dargestellte Energieführungskette 1 kann unter Bildung eines Untertrums 1A, eines Umlenkbereichs 1C und eines Obertrums 1B verformt werden und entsprechend verfahren. Typisch geht ein abgelegtes und ruhendes Untertrum 1A im Umlenkbereich 1C in das bewegte Obertrum 1B über. Die Energieführungskette 1 dient typisch dazu, ein bewegliches Maschinenteil mit Energie- und/oder Datenleitungen zu versorgen. Endseitig haben die Laschenstränge zur Befestigung an Anschlussstellen besondere Endanschlusselemente 7A, 7B mit Verbindungsbohrungen. FIG.1 zeigt eine Energieführungskette 1 mit freitragendem Obertrum 1B, das erst ab einer gewissen Länge je nach Leitungsgewicht gestützt werden muss.

Wie aus FIG.1 ersichtlich, wechseln sich in jedem Laschenstrang in Längsrichtung der Kette 1 jeweils unterschiedlich gestaltete Außenlaschen 2 mit Innenlaschen 3 ab. In beiden Laschensträngen werden jedoch aufgrund ihrer Spiegelsymmetrie die gleichen Außenlaschen 2 und die gleichen Innenlaschen 3 verwendet, wie ebenfalls in FIG.1 erkennbar.

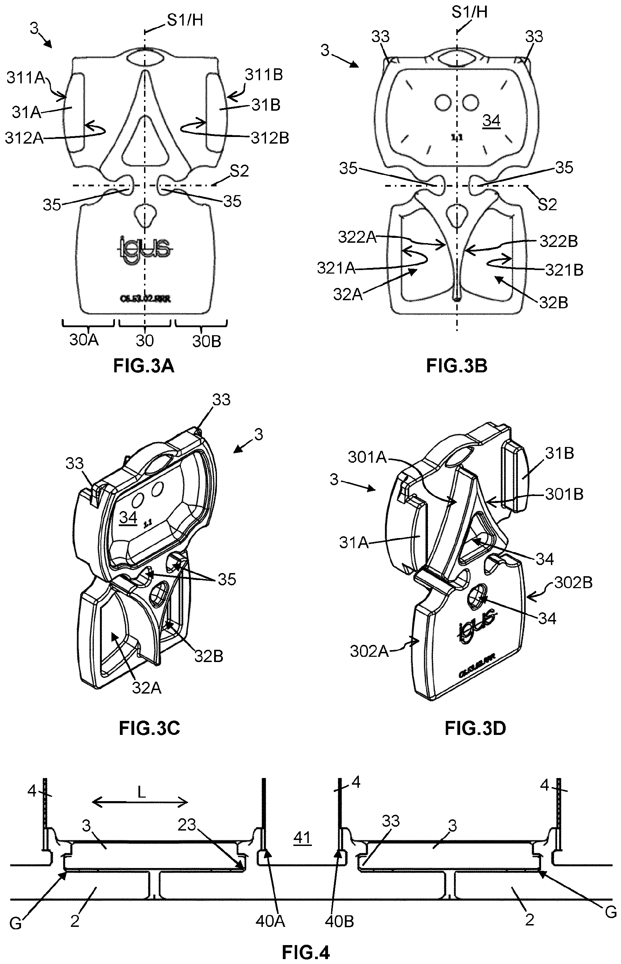

Wie aus FIG.2 und FIG.3 näher ersichtlich, ist jede Außenlasche 2 und jede 3 Innenlasche für sich genommen spiegelsymmetrisch, nämlich jeweils zu ihrer Höhenebene, insbesondere Höhen-Mittelebene S1, welche senkrecht zur Längsrichtung L bzw. neutralen Faser der Energieführungskette 1 verläuft, spiegelsymmetrisch, zumindest in ihren funktionsrelevanten Bestandteilen. Dementsprechend kann durch 180°-Drehung um die Höhen-Achse H sowohl die Außenlasche 2 als auch die Innenlasche 3 jeweils im linken oder im rechten Laschenstrang, wie in FIG.1 gezeigt, verwendet werden.

Wie weiterhin in FIG.1 gezeigt, sind die gelenkartigen Verbindungen zwischen den sich abwechselnden Innen- und Außenlaschen 2, 3 durch ein Gelenkelement 5 gebildet. Wie FIG.1 zeigt, erstrecken sich die Gelenkelemente 5 in Längsrichtung L, vorzugsweise im Wesentlichen über die gesamte Breite der Laschen 2, 3 und schließen bündig an den jeweiligen Seitenflächen der Laschen 2, 3 innen und außen ab, d.h. stehen nicht vor. Die Breite bezeichnet hierbei die Abmessung der Laschen 2, 3 senkrecht zur Längsrichtung L und zur Höhen-Achse H.

Die Innen- und Außenlaschen 2, 3 sind jeweils funktional in sich symmetrisch, d.h. zumindest mit ihren Anschlagflächen in sich symmetrisch gestaltet. Auf für die Funktion irrelevante Merkmale kommt es bei dieser Symmetrie nicht an bzw. bei solchen Merkmalen ist geringfügige Asymmetrie in der Formgebung möglich (z.B. bei der Beschriftungsprägung und dgl.).

FIG.2A-2D und FIG.3A-3D zeigen nähere Details der Innen- und Außenlaschen 2, 3.

Die Außenlaschen 2, vgl. FIG.2A-2D, haben symmetrisch zur Höhenebene S1 je zwei seitlich vorstehende Vorsprünge 21A, 21B und im zur Längsebene S2 durch die Gelenkverbinder 5, welche mittig liegen kann aber nicht muss, gegenüberliegenden Höhenbereich zwei vertiefte Taschen 22A, 22B.

Die Innenlaschen 3, FIG.3A-3D, haben symmetrisch zur Höhenebene S1 je zwei seitlich vorstehende Vorsprünge 31A, 31B und im zur Längsebene S2 durch die Gelenkverbinder 5 gegenüberliegenden Höhenbereich zwei vertiefte Taschen 32A, 32B.

Die Außenlaschen 2 und Innenlaschen 3 sind insbesondere hinsichtlich ihrer funktionalen Bereiche, insbesondere Anschlagflächen, komplementär zueinander passend ausgeführt.

Im montierten Zustand greifen die Vorsprünge 21A, 21B der Außenlaschen 2 jeweils in eine entsprechend dimensionierte Tasche 32A, 32B der beiden benachbarten, verbundenen Innenlaschen 3. Entsprechend greifen auch die Vorsprünge 31A, 31B der Innenlaschen 3 in die angrenzenden, korrespondieren Taschen 22A, 22B der beiden dieser benachbarten Außenlaschen 2.

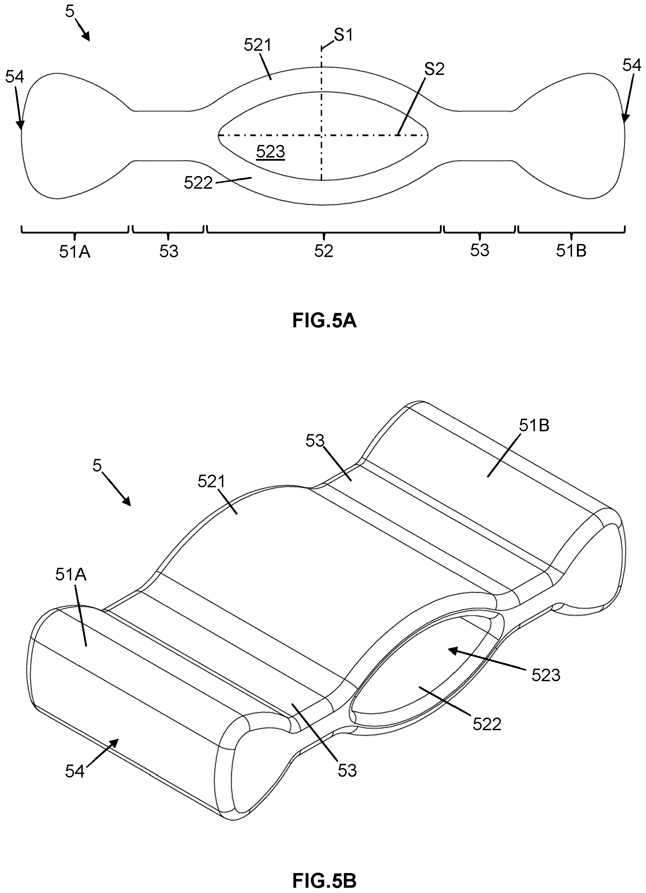

Je eine Außenlasche 2 und eine Innenlasche 3 sind dabei in Längsrichtung mittels eines biegeelastischen Gelenkverbinders 5 verbunden, welcher in FIG.5 näher gezeigt ist, sodass die Außenlaschen 2 und Innenlaschen 3 gegeneinander verschwenkbar bzw. abwinkelbar sind, um den definierten Übergang zwischen den Trumen 1A, 1B im Umlenkbogen 1C zu ermöglichen. Der Umlenkbogen 1C bewahrt dabei stets einen durch die Geometrie und Gestaltung der Laschen 2,3 insbesondere der Abstände zwischen Anschlagflächen, vorgegebenen Radius zum Schutz der Leitungen u.a. gegen Abknicken. Weiterhin wird durch Anschlagflächen, die in die entgegengesetzte Abwinkelungsrichtung in gestreckter Relativstellung, insbesondere des Obertrums 1B, wirksam sind, die freitragende gestreckte Lage im Obertrum gehalten. Die Anschlagflächen für die vollständig abgewinkelte Relativstellung im Umlenkbogen 1C und für die gestreckter Relativstellung, insbesondere des Obertrums 1B, werden nachfolgend erörtert.

Zu den Anschlagflächen für die gestreckte Relativstellung gehören erste, innere Anschlagflächen 211A, 211B (FIG.2B) der Vorsprünge 21A, 21B der Außenlasche 2. Diese ersten Anschlagflächen 211A, 211B wirken jeweils mit einer korrespondierenden ersten, äußeren Gegenanschlagflächen 321A bzw. 321B (FIG.3B) der Tasche 32A bzw. 32B einer Innenlasche 3 zusammen in der Strecklage, vgl. Obertrum 1B in FIG.1B, in welcher die Energieführungskette im Wesentlichen parallel zur Längsrichtung L liegt. Die Kräfte zwischen Anschlagflächen 211A bzw. 211B und Gegenanschlagflächen 321A bzw. 321B wirken dabei spreizend auf die jeweilige Tasche 32A bzw. 32B, und werden von einer stabilen Umrahmung der Taschen 32A bzw. 32B aufgefangen, wie FIG.3B-3C zeigen. Analog liegen in gestreckter Relativstellung weiterhin erste äußere Anschlagflächen 311A, 311B (FIG.3A) der Vorsprünge 31A, 31B der Innenlasche 3 im Anschlag mit korrespondierenden ersten Gegenanschlagflächen 221A bzw. 221B (FIG.2A) einer jeweiligen Tasche 22A bzw. 22B einer Außenlasche 2.

Zu den Anschlagflächen für die vollständig abgewinkelte Relativstellung im Umlenkbogen 1C gehören zweite, äußere Anschlagflächen 212A, 212B (FIG.2B) der Vorsprünge 21A, 21B der Außenlasche 2. Diese zweiten Anschlagflächen 212A, 212B wirken in der vollständig abgewinkelten Relativstellung jeweils mit einer korrespondierenden zweiten, inneren Gegenanschlagflächen 322A bzw. 322B (FIG.3B) der Tasche 32A bzw. 32B einer Innenlasche 3 zusammen. Die Kräfte zwischen Anschlagflächen 212A bzw. 212B und Gegenanschlagflächen 322A bzw. 322B wirken als vorteilhaft als Druckkräfte auf den Mittelbereich der Innenlasche 3, welcher ggf. auch mit geringer Stärke (je nach gewünschtem Radius des Umlenkbogens) gestaltet sein kann wie FIG.3B zeigt. Analog liegen in maximal verschwenkter Relativstellung benachbarter Laschen 2, 3 weiterhin zweite innere Anschlagflächen 312A, 312B (FIG.3A) der Vorsprünge 31A, 31B der Innenlasche 3 im Anschlag mit korrespondierenden zweiten Gegenanschlagflächen 222A bzw. 222B (FIG.2A) an der jeweiligen Tasche 22A bzw. 22B einer Außenlasche 2.

FIG.2A-3D zeigen ferner einen verdickten Mittenbereich 20 der Außenlasche 2 und einen verdickten Mittenbereich 30 der Innenlasche 3, an welchen beidseitig in Längsrichtung L und z.T. Höhenrichtung H jeweils dünnere Überlappungsbereiche 20A, 20B bzw. 30A, 30B gehalten sind. Mit den vergleichsweise dünneren bzw. mit geringerer Breite ausgeführten Überlappungsbereiche 20A, 20B bzw. 30A, 30B überlappen die Innen- und Außenlaschen 2, 3 in Längsrichtung L, wie FIG.1 veranschaulicht, sodass u.a. eine gute Seitenstabilität und Torsionssteifigkeit um die Längsrichtung erzielt wird. Die Überlappungsbereiche 20A, 20B bzw. 30A, 30B weiten in Höhenrichtung ausgehend von der Längsebene S2, welche hier durch die Gelenkverbinder 5 verläuft und/oder mittig liegen kann, auf d.h. werden in Längsrichtung L grösser. Die Dimensionierung der Gelenkelemente 5 und Laschen 2, 3 ist dabei so eingestellt, dass ein schmaler Luftspalt G zwischen den überlappenden Überlappungsbereichen 20A, 20B bzw. 30A, 30B erzielt wird, wie FIG.4 veranschaulicht. FIG.4 zeigt auch, dass die im Umlenkbogen äußeren Schmalseiten, wie in Draufsicht der FIG.4 dargestellt, die hier an sich austauschbare Nomenklatur der Innen- und Außenlaschen 2, 3 veranlassen (an der gegenüberliegenden, weniger sichtbaren Schmalseite wäre die Lage umgekehrt).

Die Laschen haben weitere Anschlagflächen für eine hohe freitragende Länge im Obertrum 1B bzw. gute Kraftverteilung im Umlenkbogen 1C. Hierzu gehören ersten stirnseitige Anschlagflächen 201A, 201B an den Überlappungsbereichen 20A, 20B der Außenlaschen 2, die in Strecklage anschlagwirksam sind mit bzw. in Anschlag stehen mit ersten stirnseitige Gegenanschlagflächen 301A, 301B am Mittenbereich 30 der Innenlasche 3.

Weiterhin stehen im Umlenkbogen 1C zweite stirnseitige Anschlagflächen 302A, 302B an den Überlappungsbereichen 30A, 30B der Innenlasche 3 im Anschlag mit zweiten stirnseitigen Gegenanschlagflächen 202A, 202B am Mittenbereich 20 der Außenlasche 2.

Wie FIG.2A-3D zeigen sind, sind sämtliche Anschlagflächen 201A, 201B; 211A, 211B; 212A, 212B; 302A, 302B; 321A, 321B und Gegenanschlagflächen 202A, 202B; 301A, 301B; 311A bzw. 311B; 322A bzw. 322B zueinander kongruent konvex bzw. konkav gekrümmt, vorzugsweise zumindest überwiegend durchgehend und/oder stetig gekrümmt. Die gewählte Krümmung hängt u.a. dabei vom maximalen Schwenkwinkel in voll abgewinkelter Stellung des Umlenkbogens 1C, d.h. vom gewünschten Radius des Umlenkbogens 1C ab. Dieser Radius wird wiederum u.a. über die passend gewählte Weite der Taschen 22A, 22B bzw. 32A, 32B und Abstände zwischen relevanten Anschlagflächen wahlweise eingestellt, wobei FIG.2A-3D eine Gestaltung für vergleichsweise kleinen Radius zweigen. Bei größeren Radien kann die Kettenteilung gleichbleibend klein bzw. kurz bleiben, indem die Mittenbereiche 20, 30 vergrößert und die Überlappungsbereiche 20A, 20B; 30A, 30B verkürzt werden.

Im Gegensatz zur Gestaltung aus WO 2012/131033 A1 haben die korrespondierenden Innen- und Außenlaschen 2, 3 erfindungsgemäß beide jeweils sowohl Anschlag- Vorsprünge 21A, 21B bzw. 31A, 31B, als auch Anschlag-Taschen 22A, 22B bzw. 32A, 32B. Hierdurch wird die Seitenstabilität erhöht und u.a. eine verbesserte Torsionssteifigkeit der Laschenstränge um Längsachsen der Stränge parallel zur Längsrichtung erzielt. Keine der beiden Laschen kann, z.B. bei Bruch oder Lösen eines Gelenkverbinders seitlich abfallen bzw. lösen, d.h. die Kette kann nicht ohne weiteres aufbrechen.

Im bevorzugten Beispiel sind durch die Längsebene S2, hier durch die Gelenkverbinder 5 verlaufend, zwei gegenüberliegende Höhenbereiche getrennt. An den Außenlaschen 2 sind jeweils in dem in FIG.2A-2B oberen Höhenbereich die Taschen 22A, 22B und in dem gegenüberliegenden unteren Höhenbereich die Vorsprünge 21A, 21B vorgesehen. Entsprechend umgekehrt sind an den Innenlaschen 3 in dem in FIG.3A-3D oberen Höhenbereich die Vorsprünge 31A, 31B und in dem gegenüberliegenden unteren Höhenbereich die Taschen 32A, 32B vorgesehen, wobei die Lage oben und unten von der jeweils umgekehrten Lage der Laschen 2, 3 in den Trumen 1A, 1B abhängt.

Weiterhin sind in FIG.2A-2D und FIG.4 Querstegaufnahmen der Außenlaschen 2 gezeigt, die als mit der Außenlasche 2 einteilige Klemmaufnahme 40 gestaltet sind, und zwei in Längsrichtung L gegenüberliegenden Klemmflächen 40A, 40B bilden, zwischen denen ein komplementär geformter Befestigungsabschnitt 41 des Querstegs 4 eingeklemmt ist. Die Klemmflächen 40A, 40B haben zur sicheren Befestigung vorteilhaft einen konvexen Rastbereich, wie FIG.2A zeigt und verriegeln in seitlicher Richtung durch eine Feder-Nut Verbindung mit dem Ende des Befestigungsabschnitts 41 (FIG.4).

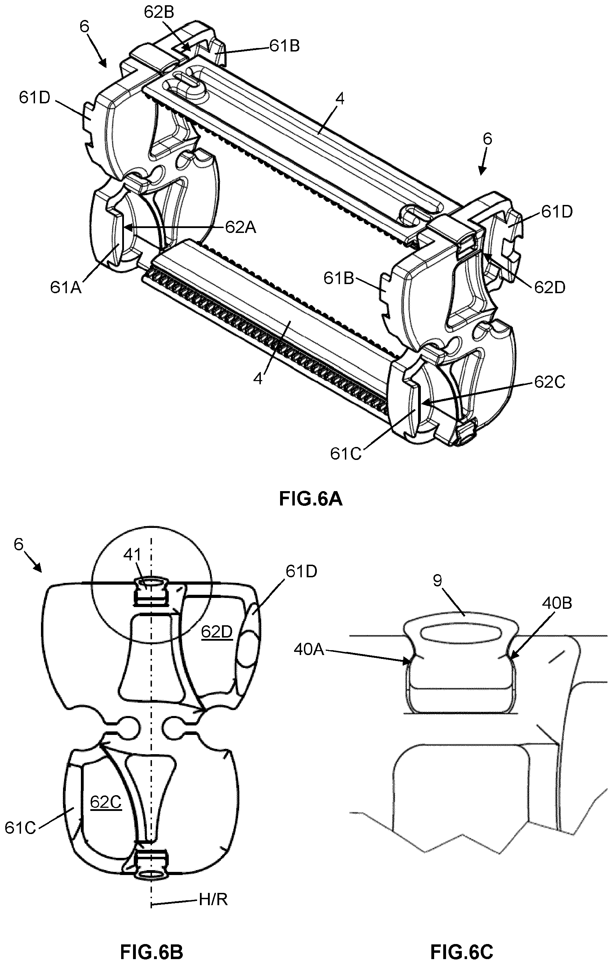

FIG.1 zeigt einen weiteren Vorteil der Gestaltung der Laschen 2, 3 (u.a. gegenüber FIG.6), wonach die dem jeweils anderen Trum 1A bzw. 1B zugewandten Schmalseiten der Laschen 2, 3 eine geradlinige in Längsrichtung L unterbrechungsfreie Auflage 8 bilden, sodass das Obertrum 1B bei langen Fahrwegen günstig abgestützt werden kann, z.B. auf Rollen oder einer Gleitschiene.

FIG.3A-3C zeigen eine zusätzliche Weiterbildung wonach die Seitenlaschen 2, 3, hier insbesondere die Innenlaschen 3 an der im Umlenkbereich 1C außenliegenden bzw. dem anderen jeweils Trum 1A, 1B abgewandten Schmalseite einen verformbaren Dämpfungsbereich 9 umfassen, welcher zur Dämpfung des Übergangs des Umlenkbereich 1C in das aufliegende Untertrum 1A, d.h. beim Auftreffen der Lasche 3 auf einer Auflage dient und so weitere Vibrationsminderung und Geräuschminderung bewirkt. In diesem Beispiel sind die Dämpfungsbereiche 9 brückenförmig, einteilig mit der Schmalseite der Innenlasche 3 hergestellt. Die Dämpfungsbereich 9 sind hier vorteilhaft als ein auf Druck beanspruchtes bogenartiges Federelement ausgeführt, welches beidseitig mit der Schmalseite der Innenlasche 3 verbunden ist und im Wesentlichen in Längsrichtung verläuft.

Wie am besten in FIG.4 ersichtlich sind zur weiteren Verstärkung der Seitenstabilität und Torsionsfestigkeit in Strecklage des Obertrums 1B stirnseitig an den oberen Eckbereichen der Überlappungsbereiche 30A, 30B der Innenlasche 3, zwei gegenüberliegende überwiegend in Längsrichtung L vorstehende Versteifungsfortsätze 33 vorgesehen, welche in Strecklage jeweils in eine korrespondierende Versteifungsaufnahme bzw. Vertiefung 23 stirnseitig am Mittenbereich 20 der Außenlasche 2 eingreift.

Zur Materialeinsparung, Gewichtsreduzierung und/oder Optimierung des Kraftflusses bzw. der Formstabilität im Herstellungsprozess können in den Mittelbereichen 20, 30 Materialaussparungen 24; 34 vorgesehen sein, deren Begrenzungsflächen am Laschenkörper vorzugsweise zur Vermeidung von Kraftspitzen mit insbesondere überwiegend konkav gekrümmten Begrenzungsflächen geformt sind, z.B. im Rahmen der Herstellung der Laschen 2, 3 aus Kunststoff um Spritzgussverfahren.

Die Innen- und Außenlaschen 2, 3 haben weiterhin im mittleren Bericht der Laschenhöhe, auf Eben der Längsebene S2, jeweils zwei gegenüberliegende Befestigungsaufnahmen 25; 35, in welchen ein jeweiliges Befestigungsende 51A, 51B des Gelenkverbinders 5 kraft- und formschlüssig eingepresst ist. Die Befestigungsaufnahmen 25, 35 sind ebenfalls spiegelsymmetrisch zur Höhenebene S1 und ferner zur Längsebene S2 und haben einen zu den Befestigungsenden 51A, 51B konjugierten, passenden Querschnitt mit leichtem Untermaß für eine dauerferst Pressverbindung. Die Befestigungsaufnahmen 25; 35 sind in Breitenrichtung durchgehend offen, sodass von beiden Seiten montiert oder demontiert werden kann. Die Gelenkverbinder 5 haben bezüglich des nominalen Abstands zwischen den gegenüberliegenden Befestigungsaufnahmen 25, 35 vorzugsweise eine geringfügige Überlänge sodass der Gelenkverbinder in Strecklage der Trume 1A, 1B leicht gestaucht wird.

FIG.5A-5B zeigen den bevorzugten Gelenkverbinder bzw. das Gelenkelement 5. Der Gelenkverbinder 5 ist ein in Längsrichtung L der Energieführungskette 1 erstrecktes, plattenartiges separates Bauteil aus einem dauerelastischen Kunststoff. Entsprechend den Laschen 2, 3 ist auch das Gelenkelement 5 bezüglich der Höhen-Mittelebene S1 spiegelsymmetrisch ausgebildet. Es ist ein Körper mit Befestigungsenden 51A, 51B, einem mittleren Bereich 52, sowie plattenartigen Übergangsbereichen 53 zu jedem der gegenüberliegende Endbereiche bzw. Befestigungsenden 51A, 51B. Für eine Verbesserung der Biegefestigkeit und der Stauchbarkeit in Strecklage hat der mittlere Bereich 52 zwei gegensinnig nach außen gewölbten Materialbereiche 521, 522 mit einem dazwischenliegenden beidseitig offenen Hohlraum 523.

Der Querschnitt beider Befestigungsenden 51A, 51B ist hierbei nicht kreiszylindrisch, sondern im wesentlichen trilobular (in Art eines Gleichdicks) bzw. näherungsweise dreieckig ausgeführt, sodass auch bei Abwinkelung bzw. bestimmungsgemäßer Biegung ein drehfester Formschluss der Befestigungsenden 51A, 51B in der entsprechenden Befestigungsaufnahme 25, 35 gewährleistet ist, d.h. kein Abrieb durch drehungsbedingte Reibung entstehen kann.

Die Befestigungsenden 51A, 51B sind gegenüber den Übergangsbereichen 53 deutlich verdickt bzw. mit erheblich größerem Querschnitt ausgeführt um ein ungewolltes Lösen aus den Befestigungsaufnahmen 25; 35 sicher auszuschließen, da das Spaltmaß der Einmündung in die Befestigungsaufnahmen 25; 35 der Bauhöhe der Übergangsbereiche 53 entspricht, bzw. mit leichtem Untermaß demgegenüber ausgeführt ist, um den Übergangsbereich 53 an den Begrenzungsflächen der Einmündung zu klemmen.

Im gezeigten Ausführungsbeispiel verbindet das Gelenkelement 5 jeweils genau zwei Laschen 2, 3 miteinander, hier jeweils eine Außenlasche 3 mit einer Innenlasche 2. Zur Befestigung an der Innenlasche 2 weist das Gelenkelement 5 endseitige Befestigungsbereiche bzw. Verdickungen 53 auf. Die Verdickungen 53, welche zur Sicherung bzw. Befestigung an Befestigungsaufnahmen der Laschen 2 bzw. 3 dienen sind hier annähernd trilobular bzw. näherungsweise dreieckig.

Jeder Befestigungsbereich 51A, 51B hat ferner zumindest an seinem in Längsrichtung L weisenden Stirnende eine abgeflachte und/oder gekrümmte Anlagefläche 54, deren Krümmungsradius deutlich größer ist, als die Hälfte der größten Querschnittabmessung des Befestigungsbereichs, insbesondere deutlich grösser als der Radius des Umkreises zum trilobularen Querschnitt. Die Anlagefläche 54 erlaubt dadurch u.a. eine günstige, großflächige Einleitung von Druckkraft für die Dämpfung durch Stauchung bei Übergang in die Strecklage bzw. zur Verstärkung einer Vorspannung im freitragenden Obertrum, welche durch elastische Rückstellkraft der gewölbten Materialbereiche 521, 522 verstärkt wird. Auch andere vergleichbare Querschnitte, z.B. eine dreieckige oder ggf. auch viereckige Formgebung mit abgerundeten Ecken, liegen im Rahmen der Erfindung.

Hinsichtlich des alternativen Ausführungsbeispiels in FIG.6A-6B wird die Lehre aus DE 20 2020 103 046.9 vollumfänglich einbezogen, und es werden hier nur einige Unterschiede erläutert. Mit der Gestaltung der Lasche 6 aus FIG.6A-6B können in beiden Laschensträngen durchgehend aufeinanderfolgenden baugleiche Seitenlaschen 6 vorgesehen werden.

Dies wird insbesondere erreicht, in dem die Seitenlasche mit ihren anschlagwirksamen Anschlagflächen in sich rotationssymmetrisch sind in Bezug auf eine Höhenachse H bzw. Rotationsachse R, welche senkrecht zur Längsrichtung L der Kette und zumindest im Wesentlichen parallel zu den Seitenlaschen 6, vorzugsweise in deren Mittelebene, verläuft.

Die Seitenlasche 6 hat zwei Vorsprünge 61C, 61D, welche vom Aufnahmeraum weg vorstehen, und zwei Vorsprünge 61A, 61B, welche zum Aufnahmeraum hin vorstehen und die Seitenlasche hat zwei Anschlagtaschen 62A, 62B die zum Aufnahmeraum hin öffnen und zwei Anschlagtaschen 62C, 62D die vom Aufnahmeraum weg öffnen.

Die Seitenlasche 6 kann mit nur einem Formwerkzeug hergestellt werden und erlaubt auch die Verwendung in mehr als 3 Strängen wie in DE 20 2020 103 046.9 beschrieben.

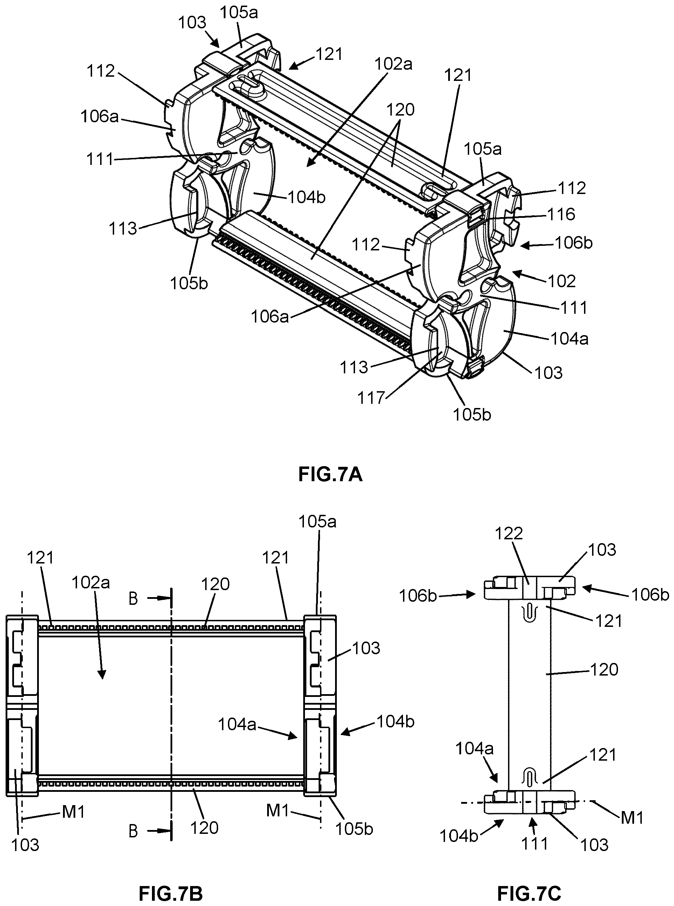

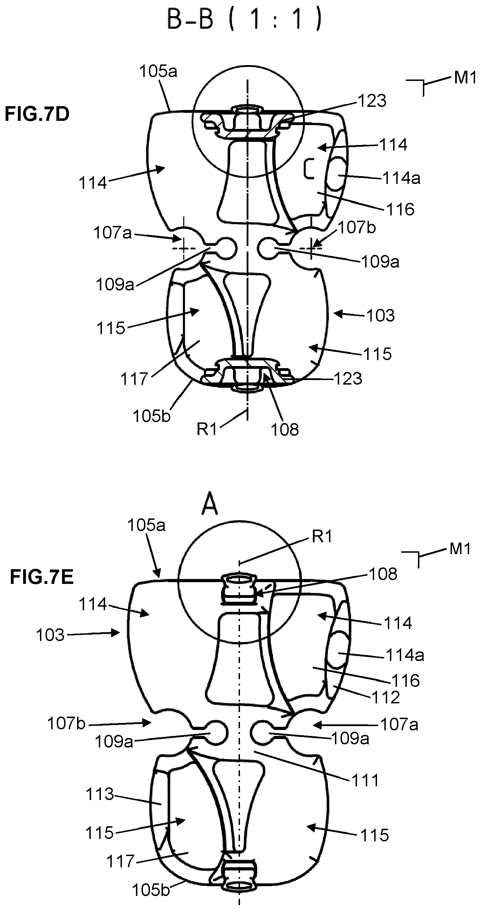

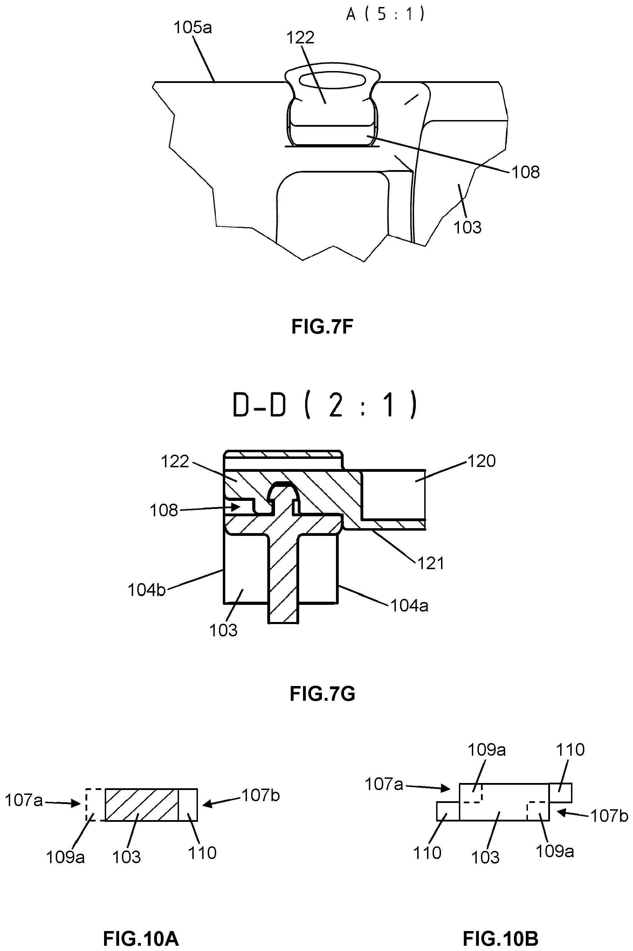

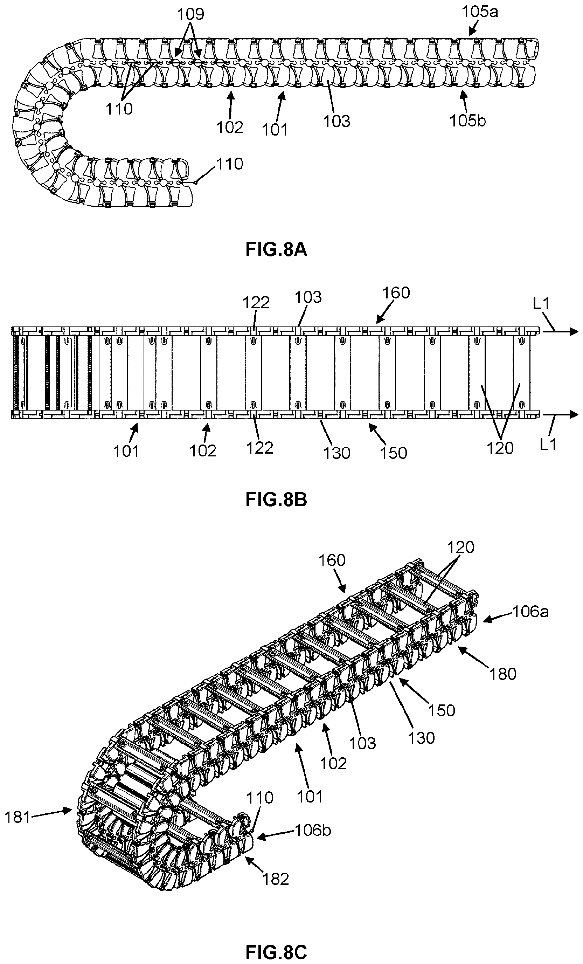

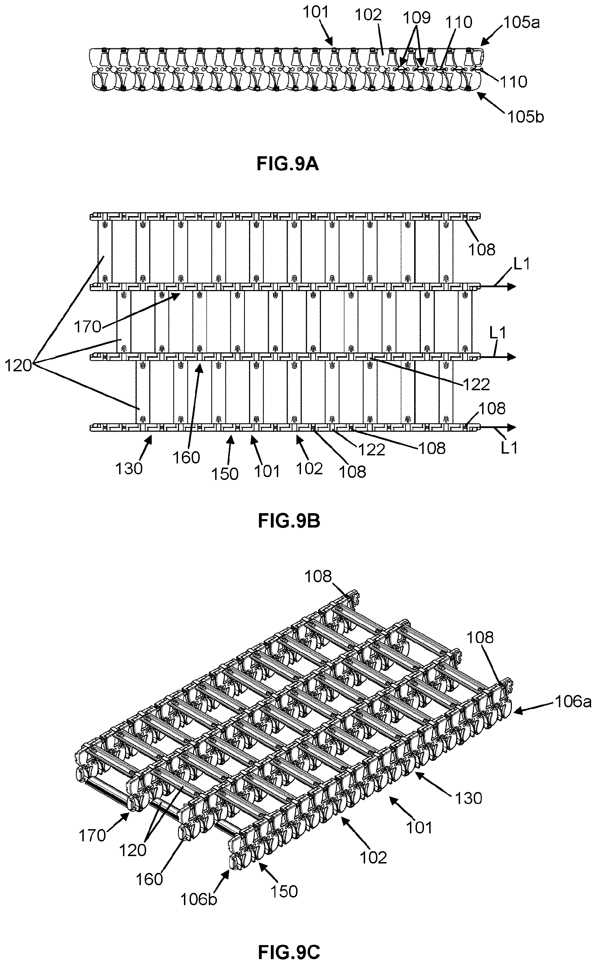

FIG.7 zeigt ein Kettenglied 102 einer gemäß der weiteren Variante erfindungsgemäßen Energieführungskette 101 zur Führung von Leitungen, wobei die Kette eine Vielzahl von gelenkig miteinander verbundenen Kettengliedern 102 aufweist, welche einen Aufnahmeraum 102a zur Aufnahme und Führung der mindestens einen Leitung ausbilden (FIG. 8, 9). Das jeweilige Kettenglied 102 weist gegenüberliegende Laschen 103 mit inneren und äußeren bzw. mit ersten und gegenüberliegenden zweiten Seitenflächen 104a,b und mit zur Längsrichtung der Kette 101 im Wesentlichen parallelen Schmalseiten 105a,b auf. Gemäß FIG. 8,9 weisen mindestens einige oder sämtliche der Glieder 102 mindestens einen die Laschen 103 lösbar miteinander verbindenden Quersteg 120 auf, gemäß FIG. 7 ist an dem Kettenglied 102 an beiden gegenüberliegenden Schmalseiten 105a,b der jeweiligen Lasche 103 zumindest ein Quersteg 120 befestigt oder befestigbar. Die Querstege 120 weisen an beiden gegenüberliegenden Endbereichen 121 Befestigungsmittel 122 zur lösbaren Befestigung an einer Lasche auf. Die Laschen 103 des Kettengliedes 102 ("Gliedes") weisen an beiden Schmalseiten 105a,b jeweils Befestigungsmittel 108 zur lösbaren Befestigung der korrespondierenden Querstegbefestigungsmittel 121 auf.

Die Laschen 103 des Gliedes 102 weisen Gelenkverbindungen 109 auf, welche mit korrespondierenden Gelenkverbindungen 109 der Laschen 103' des benachbarten Kettengliedes 102' gegebenenfalls beispielsweise mittels separater Gelenkelemente 110 gelenkig miteinander verbindbar oder in der Kette verbunden sind, also zumindest zwei Gelenkverbindungen 109 an der jeweiligen Lasche. Die Gelenkverbindungen 109 sind hier an den Laschenstirnseiten 106a,b angeordnet, was besonders vorteilhaft aber nicht zwingend ist. Die Lasche 103 weist hier an beiden in Laschenlängsrichtung L beabstandeten Endbereichen 107a,b, hier im speziellen an den Laschenstirnseiten 106a,b zwei Aufnahmen 109a zur Ankoppelung jeweils eines separaten Gelenkelementes 110 auf, welches mit einer korrespondierenden Gelenkelementaufnahme einer benachbarten Lasche verbindbar ist. Die Gelenkelementaufnahmen 109a sind hier im Dickstellenbereich 111 der Lasche 103 angeordnet. Die Gelenkverbindungen 109 der Lasche 103 sind hier jeweils als Halte- und Befestigungsbereich zur Ankoppelung eines separaten Gelenkelementes 110 ausgebildet.

FIG.10 zeigt schematische Darstellungen von Gelenkelementanordnungen der Lasche 103 auf Höhe der Gelenkverbindung 109. Nach FIG. 10a kann beispielsweise auch an einer Gelenkverbindung der Lasche an einem Endbereich 107a,b derselben, insbesondere an der Laschenstirnseiten ein Gelenkelement 110 dauerhaft oder lösbar an der Lasche 103 angeordnet, beispielsweise auch einstückig angeformt, sein, und an dem gegenüberliegenden Laschenendbereich, insbesondere der Stirnseite derselben, kann eine Gelenkelementaufnahme 109a zu Halterung und Festlegung eines Gelenkelementes der benachbarten Lasche vorgesehen sein. Alternativ nach FIG. 10b können beispielsweise auch die Gelenkelemente 110 sich nur etwa über die halbe Laschenbreite erstrecken und an beiden Laschenendbereichen bzw. Laschenstirnseiten Gelenkelement 110 und Gelenkelementaufnahme angeordnet sein, welche hier rotationssymmetrisch um die Rotationsachse R1 der Lasche angeordnet sind. Die Gelenkverbindungen mit den Gelenkelementaufnahmen 109a nach FIG. 10 können wie auch die Gelenkelementaufnahmen der FIG. 7 auf etwa halber Höhe an der Lasche im Dickstellenbereich 111 derselben angeordnet sein. Gegebenenfalls können auch die Gelenkverbindungen benachbarter Laschen miteinander zur Ausbildung der Gelenkverbindung 109 miteinander verbindbar sein, so dass auch an beiden Laschenendbereichen, beispielsweise an den Stirnseiten, Gelenkelemente vorgesehen sein können.

Die Laschenstirnseiten können sich hier jeweils im Bereich der Gelenkelementaufnahme bis zum Dickstellenbereich 111 der Lasche 103 erstrecken oder teilweise oder vollständig in diesem angeordnet sein. Die jeweilige Lasche 103 weist somit an zumindest einer Stirnseite derselben ein Gelenkelement auf, welches mit einer benachbarten baugleichen Lasche unter Ausbildung einer Gelenkverbindungen zwischen den Laschen zusammenwirkt. Die gelenkig miteinander verbundenen Laschen von in Kettenlängsrichtung hintereinander angeordneten Kettengliedern bilden zumindest zwei in Kettenlängsrichtung verlaufende, seitlich zueinander beabstandete Laschenstränge 150,160 aus, zwischen denen zumindest ein Teil des Aufnahmeraums 102a für die zumindest eine Leitung angeordnet ist (FIG. 8, 9). In FIG. 8,9 sind nur einige der Gelenkelemente 110 des Laschenstranges dargestellt. Aufeinanderfolgende Kettenglieder der Energieführungskette sind aufgrund der Gelenkverbindungen 109 zwischen benachbarten Gliedern 102 bzw. Laschen 103 relativ zueinander lageveränderlich, beispielsweise zur Ausbildung zweier oder mehrerer Trume mit diese jeweils verbindendem Umlenkbereich wie z.B. Obertrum 180, Untertrum 181 und Umlenkbereich 182 gemäß FIG. 8c,9c.

Der Aufnahmeraum 102a ist kastenförmig ausgebildet. Die Laschen 103 sind vorzugsweise als im Wesentlichen plattige Bauteile ausgebildet. Die innere und die äußere Laschenseitenfläche 104a,104b sind eben und glattwandig ausgebildet, wobei von den ebenen Laschenseitenflächen zurückspringende Vertiefungen zur Materialersparnis und/oder Verminderung von Schrumpfverzug bei der Herstellung der Laschen, vorzugsweise als Kunststofflaschen, vorhanden sind. Die Befestigungsmittel 108 der Laschen für den zumindest einen oder sämtliche Querstege, die Gelenkverbindungen 109 zur gelenkigen Verbindung benachbarter Laschen und die Anschläge zu Begrenzung der Gelenkbewegung benachbarter Laschen sind vollständig zwischen den Laschenseitenflächen angeordnet. Der Laschenstrang 150, 160,170 hat zumindest im Wesentlichen über seine Länge eine durchgehend ebene Innen- und Außenseite.

Gemäß FIG.8 und FIG.9 sind durchgehend über einen zumindest mehr als drei benachbarte Kettenglieder 102 umfassenden Kettenabschnitt 130, welcher die zumindest zwei oder sämtlichen der Laschenstränge 150,160,170 umfasst, die Laschenstränge insgesamt durchgehend, also vollständig, aus zueinander baugleichen Laschen aufgebaut (wie in FIG. 8,9 dargestellt), sodass die jeweilige Lasche 103 wahlweise an beliebiger Position an jedem der verschiedenen Stränge des Kettenabschnittes anordenbar ist. Die Laschen 103 des Kettenabschnittes, also auch aller Laschenstränge desselben, sind hier baugleich zueinander ausgebildet. Der Kettenabschnitt bestehend aus baugleichen Laschen erstreckt sich hier über die Gesamtlänge der Laschenstränge 150,160,170 bzw. der Kette 101. Die Endglieder der Kette bzw. Endlaschen der Stränge (nicht dargestellt) können jedoch anders ausgebildet sein, beispielsweise zusätzlich Befestigungsbereiche zur Festlegung derselben an einem Mitnehmer der Kette 101 oder an einem Anschlusspunkt der Kette aufweisen, wobei es auch möglich ist, diese Befestigungsbereiche an jeder der baugleichen Laschen auszubilden. Der Ausdruck "die Laschen" des Kettenabschnittes 130 bezieht sich generell auf sämtliche Laschen des Kettenabschnittes, was entsprechend für die Querstege 120 gilt. Allgemein im Rahmen der Erfindung ist somit ein gegebener Quersteg wahlweise an einer beliebigen Lasche des Kettenabschnittes befestigbar, unter Verbindung von Laschen verschiedener, vorzugsweise benachbarter Laschenstränge mittels des Quersteges. Sämtliche Querstege 120 sind an beiden Endbereichen 121 desselben lösbar an den Laschen befestigbar.

Sämtliche Laschen 103 des Kettenabschnittes 130 weisen jeweils Befestigungsmittel 108 für den zumindest einen Quersteg an oder im Bereich beider der Laschenschmalseiten 105a,b auf, welche derart angeordnet und ausgebildet sind, dass der Quersteg 120 jeweils wahlweise von der einen oder der anderen der beiden Laschenseitenflächen 104a,b abragend, also von der Seitenfläche weg erstreckend, an der Lasche befestigbar ist, wie in FIG. 8, 9 dargestellt, und dies in Bezug auf beide Laschenschmalseiten. Sämtliche Befestigungsmittel der Laschen des Kettenabschnittes 130 für die Querstege sind baugleich ausgebildet. Sämtliche Querstege des Kettenabschnittes sind baugleich ausgebildet oder weisen zumindest baugleiche Befestigungsmittel zur Verbindung mit den Laschen auf. An bzw. im Bereich von einer bzw. jeder der Laschenschenschmalseiten der jeweiligen Lasche können gegebenenfalls auch mehrere Querstege befestigbar sein, durch Bereitstellung entsprechender Befestigungsmittel an der jeweiligen Lasche. Die Laschenbefestigungsmittel 108 für den Quersteg, hier für beide Querstege, sind dauerhaft und unlösbar an der jeweiligen Lasche ausgebildet sind, vorzugsweise an den Laschen einstückig angeformt. Die "einstückige Anformung" umfasst allgemein eine einstückige Ausbildung des Befestigungsmittels 108 mit der Lasche, wobei das Befestigungsmittel auch als Ausnehmung 108a der Lasche ausgebildet sein kann.

Sämtliche der Laschen 103 des Kettenabschnittes 130 weisen jeweils Anschläge 112 auf, welche mit korrespondierenden Anschlägen 113 des jeweils benachbarten Kettengliedes zur Begrenzung der Gelenkbewegung benachbarter Laschen zueinander zusammenwirken. Die Anschläge 112,113 sind dauerhaft mit den Laschen verbunden, vorzugsweise einstückig an diesen angeformt. Jeder der Anschläge weist jeweils einen Anformungsbereich an der jeweiligen Lasche, hier an einem Fortsatz derselben, auf, wobei das dem Anformungsbereich gegenüberliegende freie Ende des Anschlages nicht durch einen anderen Bereich der jeweiligen Lasche überdeckt ist. Die Laschen 103 sind in Bezug auf die Anschläge 112,113 baugleich ausgebildet, was auch die Ausbildung und Anordnung der Anschläge an den baugleichen Laschen umfasst.

Die Querstege 120 sind jeweils zumindest im Wesentlichen geradlinig ausgebildet und/oder die Querstegendbereiche 121 sind zumindest im Wesentlichen geradlinig zueinander angeordnet. Die Laschenbefestigungsbereiche 108 für die Querstege 120 sind vorzugsweise zur Befestigung von zumindest im Wesentlichen geradlinig ausgebildeter Querstege ausgebildet.

Die Laschenbefestigungsmittel 108 für den jeweiligen Quersteg 120, bzw. für sämtliche der Querstege des Kettengliedes, sind hier als Klemm- und/oder Rastmittel ausgebildet, zum Zusammenwirken mit korrespondieren Befestigungsmitteln 122 der Querstege, ohne hierauf beschränkt zu sein. Die Befestigungsmittel 108 der Lasche sind hier im Bereich von oder genauer gesagt in einer Aufnahmenut 108a und/oder Klemmaufnahme der Lasche für einen Querstegendbereich vorgesehen, was im Rahmen der Erfindung besonders vorteilhaft ist, die genannten Befestigungsmittel können aber auch auf andere Weise ausgebildet sein. Die Aufnahmenut 108a kann hierbei selber das Befestigungsmittel 8 ausbilden und auch als Klemm- und/oder Rastaufnahme ausgebildet sein. Der Quersteg 120 kann in der Laschennut 108a im Klemmsitz und/oder rastend festgelegt sein, wozu die Nutflanken klemmend und/oder rastend mit den Querstegbefestigungsmittel 122 zusammenwirken, gegebenenfalls alternativ oder zusätzlich auch Befestigungsmittel am Nutgrund. Eine Klemmaufnahme kann beispielsweise auch lokal im Bereich oder an einer Laschenschmalseite angeordnet sein, beispielsweise als lokale Vertiefung, oder auf andere geeignete Weise. Die Aufnahmenut 108a erstreckt sich von der inneren Laschenseitenfläche 104a hin in Richtung auf die gegenüberliegende äußere Laschenseitenfläche 104b bzw. bis zu dieser hin, also hier durchgehend über die gesamte Laschenbreite. Die Nut 108a kann auch durch einen Steg oder dergleichen, ggf. teilweise, unterbrochen sein. Die Laschennut 108a ist an beiden Nutenden offen ausgebildet. Hierdurch ist eine baulich kompakte Ausführungsform der Lasche gegeben, an welcher der Quersteg 120 wahlweise von einer der beiden Laschenseitenflächen 104a,b abragend mit einem Endbereich 121 an der Lasche befestigbar ist. Der Quersteg 120 ist hierbei winkelstabil an der Lasche festgelegt. Die Winkelstabilität kann sich einerseits in Bezug auf die Verhinderung einer Auslenkung des Quersteges in Kettenlängsrichtung beziehen, sodass das Kettenglied besonders formstabil ausgebildet ist. Die Winkelstabilität kann sich alternativ oder zusätzlich auch darauf beziehen, dass der Quersteg 120 gegenüber einer Verschwenkung desselben um die Laschenlängsrichtung L1 bzw. Schmalseite der Lasche gesichert ist. Ferner ist der Quersteg 120 mit seinem Endbereich jeweils verschiebungssicher in Bezug auf die Quersteglängsrichtung an der Lasche befestigt. Hierzu sind Verschiebungssicherungsmittel 108b an der Lasche vorgesehen, welche hier als Vorsprung, insbesondere Rastvorsprung, ausgebildet sind, welcher an dem Querstegendbereich angreift. Die Verschiebungssicherungsmittel 108b sind hier in der Aufnahmenut 108a angeordnet. Diese Befestigung des Quersteges ist besonders angepasst, sodass das Kettenglied einerseits eine hohe Stabilität aufweist und andererseits erfindungsgemäß einsetzbar ist.

Der die Lasche 103 übergreifende Endbereich 121 des Quersteges 120 mit den Befestigungsmitteln 122 erstreckt sich hier von der Lascheninnenseite über die Laschenmittelebene hinaus in Richtung auf die äußere Laschenseitenfläche oder bis zu dieser hin, ohne von dieser vorzustehen. Der übergreifende Querstegendbereich ist hier vollständig im Querschnittsbereich der Lasche angeordnet ist. Der übergreifende Querstegendbereich erstreckt sich hier über die gesamte Laschenbreite bzw. die gesamte Längserstreckung der Aufnahmenut. Hierdurch ist eine stabile und platzsparende Befestigung des Quersteges an der Lasche gegeben.

Die beschriebene Ausgestaltung der Befestigung des Quersteges mit den Laschen ist besonders geeignet, um den Quersteg stabil an der jeweiligen Lasche zu befestigen und auch wahlweise von der einen oder von der anderen Laschenseitenfläche abragend anzuordnen.

Die Querstege 120 können allgemein einstückig ausgebildet sein. Die Querstege 120 können jeweils gegebenenfalls auch mehrstückig ausgebildet sein und beispielsweise an einem oder beiden ihrer Endbereiche ein separates Verbindungsstück 123 zur Verbindung des Quersteges mit der Lasche 103 aufweisen. Der Befestigungsbereich zwischen Quersteg und Lasche, beispielsweise der Querstegendbereich, kann auch mit einem anderen Material als der Querstegkorpus ausgebildet sein, welches insbesondere eine höhere Elastizität bzw. geringere Härte aufweisen kann, welches Material auch verliersicher an dem Quersteg befestigt sein kann, bspw. durch Verkleben oder durch einstückige Anformung wie bspw. im Spritzgussverfahren, z.B. 2-Komponenten-Spritzgussverfahren. Das Verbindungsstück 123 ist hier zwischen dem Querstegendbereich 21 und der Lasche 103 angeordnet. Bei der Demontage des Quersteges 120 verbleibt das Verbindungsstück 123 bestimmungsgemäß an dem Quersteg oder an der Lasche. Dieses andere Material und/oder Verbindungsstück 123 kann die Klemm- und/oder Rastverbindung zwischen Quersteg 120 und Lasche 103 bezüglich der Haltekraft verbessern.

Die Laschen 103 weisen jeweils einen mittleren Bereich, d.h. Zentralbereich, in Bezug auf die Längserstreckung derselben auf, der als Dickstellenbereich 111 ausgebildet ist. An dem Dickstellenbereich 111 der Lasche sind die Befestigungsmittel 108 der Lasche zur Befestigung des zumindest einen oder mehreren Querstege 120 vorgesehen. Der Dickstellenbereich erstreckt sich in Bezug auf die Laschenhöhe bis in etwa oder bis den beiden Laschenschmalseiten 105a,b. Von dem Dickstellenbereich 111 der Lasche gehen sich in Laschenlängsrichtung L erstreckende Fortsätze 114,115, welche zumindest im Wesentlichen plattenförmig ausgebildet sind und eben eine geringe Breite als der Dickstellenbereich 111 der Lasche aufweisen. Bei benachbarten Laschen 103 in dem Laschenstrang 150,160,170 überlappen die Fortsätze 114,115 der benachbarten Laschen einander seitlich. Die Gelenkverbindungen 109 der Lasche 103 sind von den Schmalseiten 105a,b beabstandet, hier im mittleren Höhenbereich der Lasche angeordnet. Die Fortsätze 114,115 sind an beiden Laschenendbereichen 107a,b jeweils beidseitig der Gelenkverbindung angeordnet, also bei gegebener Lage der Lasche einer "oberhalb" und einer "unterhalb" der Gelenkverbindung, sodass hier vier Fortsätze 114,115 an der Lasche ausgebildet sind.

Die Laschenfortsätze 114,115 sind hier verschränkt angeordnet: in Bezug auf die jeweilige Laschenstirnseite 106a,b ist einer der Fortsätze 114,115 an der inneren Laschenseitenfläche 104a und der andere Fortsatz 114,115 an der äußeren Laschenseitenfläche angeordnet, was für beide Laschenstirnseiten 106a,b gilt, wobei in Bezug auf die Laschenlängsrichtung L1 für die Fortsätze 114 oberhalb der Gelenkverbindung einer der Forstsätze lascheninnenseitig und der andere Fortsatz laschenaussenseitig angeordnet ist, was entsprechend - allerdings mit umgekehrter Zuordnung der Fortsätze zu der jeweiligen Laschenseitenfläche - auch für die unterhalb der Gelenkverbindung angeordneten Fortsätze 115 gilt. Generell können die Laschen 103 aber beispielsweise auch gekröpft ausgebildet sein, wobei die verschränkte Ausführung aber hinsichtlich der Stabilität des Laschenstranges und auch der flexiblen Anordnung der jeweiligen Laschen in verschiedenen Laschensträngen mit beliebiger Position um deren Rotationsachse, bevorzugt ist.

Die Anschläge 112,113 der jeweilige Lasche zur Begrenzung der Gelenkbewegung gegeneinander bei der Kettenverfahrung sind hier an den Laschenfortsätzen 114,115 angeordnet und ragen seitlich von den Fortsätzen, also in Längsrichtung der an den Laschen befestigten Querstege 120, von den Fortsätzen ab. Bei benachbarten Laschen eines Laschenstranges greift der Anschlag 114,115 einer Lasche in eine zu einer Laschenseitenfläche offene Ausnehmung 116,117 der benachbarten Lasche 103 ein. Die Erstreckung des jeweiligen 112,113 Anschlages in Richtung der Laschenhöhe, d.h. des Abstandes der Laschenschmalseiten, ist hierbei kleiner als die Erstreckung der diesen jeweils aufnehmenden Ausnehmung 116,117 in Richtung der Laschenhöhe, so dass die benachbarten Laschen gegeneinander verschwenkbar sind. Der Anschlag 112,113 kann hierbei in Laschenlängsrichtung spielfrei oder nahezu spielfrei zu einem Bereich der benachbarten Lasche angeordnet und bei der Gelenkbewegung an diesem vorbeigeführt werden, hier an dem Dickstellenbereich 111 der Lasche, wodurch sich eine weiter erhöhte Querstabilität des Laschenstranges ergibt. Die Konturen der in Laschenlängsrichtung L1 aufeinander zuweisenden Flächen der Anschläge 112,113 und des benachbarten Gliedes, hier des Dickstellenbereichs 111, sind kongruent zueinander ausgebildet. Generell, weniger bevorzugt, können die Anschläge 112,113 aber auch beispielsweise in Laschenlängsrichtung L1 von den Fortsätzen abragen und beispielsweise jeweils in eine zu der Laschenstirnseite 106a,b hin offene Ausnehmung zur Begrenzung der Gelenkbewegung eingreifen (nicht dargestellt).

Die Laschen können Dämpfungselemente (nicht dargestellt) aufweisen, welche zur Anschlagdämpfung beim Anschlag benachbarter Laschen eines Laschenstranges aneinander ausgebildet sind, und an den Laschen ebenfalls baugleich ausgebildet sind. Die Dämpfungselemente können beispielsweise in Aufnahmen 114a der Laschenfortsätze 114 angeordnet sein.

Die die Laschenstränge 150,160,170 umfassenden Kettenabschnitte 130 sind insgesamt durchgehend, also vollständig, aus Laschen 103 aufgebaut, welche in benachbarten oder verschiedenen Laschensträngen 150,160,170 der Kette 101 durch translative Verschiebung entlang der Längserstreckungsrichtung der Querstege 120 aufeinander abbildbar sind. Dies kann für sämtliche Laschenstränge des Kettenabschnittes gelten.

Die die Laschenstränge 150,160,170 umfassenden Kettenabschnitte 130 sind insgesamt durchgehend, also vollständig, aus Laschen 103 aufgebaut, welche in sich rotationssymmetrisch sind, und zwar in Bezug auf eine Rotationsachse R1, welche senkrecht zur Längsrichtung L1 der Lasche 103 und zumindest im Wesentlichen parallel zu den Laschenseitenflächen 104a,b verläuft und welche vorzugsweise in der Mittelebene M1 der Lasche verläuft. Dies gilt somit auch für die Befestigungsmittel 108 der Laschen für die Querstege 120, Gelenkverbindungen 109 der Laschen zur gelenkigen mit benachbarten Laschen und die Anschläge 112,113 zur Begrenzung der Gelenkbewegung benachbarter Laschen zueinander. Dies kann für sämtliche Laschenstränge des Kettenabschnittes gelten. Der Kettenabschnitt 130 bzw. die Kette 101 ist hierdurch besonders einfach aufgebaut und die erfindungsgemäßen Vorteile ergeben sich in besonderer Weise.

Die Befestigungsmittel 108 der jeweiligen Lasche 103 für die Querstege 120 und/oder die Gelenkverbindungen 109 der Laschen sind symmetrisch zu der Laschenmittelebene M1 angeordnet und hier unabhängig voneinander vorzugsweise zugleich auch in der Laschenmittelebene M1 angeordnet. Die Laschenmittelebene M1 verläuft parallel zu den Laschenseitenflächen 104a,b, mittig zu diesen. Die Laschenfortsätze 114,115 erstrecken sich jeweils bis zur Laschenmittelebene M1.

Nach FIG.9 weist die Energieführungskette 101 zumindest drei oder mehr in Kettenlängsrichtung verlaufende, seitlich zueinander beabstandete Laschenstränge 150,160,170 auf, wobei der sich durchgehend über zumindest mehrere benachbarte Kettenglieder erstreckende Kettenabschnitt 130 erfindungsgemäß bezüglich der drei oder mehr Laschenstränge insgesamt durchgehend und vollständig aus baugleichen Laschen 103 aufgebaut ist. Die zumindest drei oder sämtliche der in Kettenlängsrichtung verlaufenden Laschenstränge 150,160,170 sind vollständig aus baugleichen Laschen aufgebaut.

Bei der Kette 101 gemäß FIG. 9 sind bei einem ersten Paar von benachbarten ersten und zweiten Laschensträngen 150,160 erste Kettenglieder 102a vorgesehen sind, wobei die in unterschiedlichen Laschensträngen 150,160 angeordneten Laschen 103 an beiden Schmalseiten 105a,b mit lösbaren Querstegen 120 unter Ausbildung von Kettengliedern 102a miteinander verbunden sind. Ferner sind zweite Kettenglieder 102b vorgesehen, bei welchen die in unterschiedlichen Laschensträngen 150,160 angeordneten Laschen nicht mit Querstegen miteinander verbunden sind. In den beiden benachbarten ersten und zweiten Laschensträngen 150,160 folgen erste und zweite Kettenglieder 102a,102b in Kettenlängsrichtung aufeinander. Bei einem weiteren dritten Laschenstrang 170 der Kette 101 sind besagte erste und zweite Kettenglieder 102a,b vorgesehen, welche in Kettenlängsrichtung aufeinanderfolgen. Der zweite Laschenstrang 160 ist zwischen dem ersten und dem dritten Laschenstrang 150,170 angeordnet. An dem zweiten Laschenstrang 160 sind Laschen 103 vorgesehen sind, welche mittels Querstegen 120, vorzugsweise nur, mit Laschen des ersten Laschenstranges 150 lösbar verbunden sind, wobei der zweite Laschenstrang 160 ferner Laschen 103 aufweist, welche mittels Querstegen 120, vorzugsweise nur, mit Laschen des dritten Laschenstranges 170 lösbar verbunden sind. Die Laschen 103 aller drei Laschenstränge sind baugleich zueinander ausgebildet. Alle Laschenstränge sind durchgehend aus baugleichen Laschen aufgebaut.

Gemäß FIG. 9 sind drei oder ggf. mehr Laschenstränge 150,160, 170 vorgesehen, wobei zumindest ein Laschenstrang 160 zwischen zwei benachbarten Laschensträngen 150,170 angeordnet ist, unter Ausbildung eines ersten, eines mittleren zweiten und eines dritten Laschenstranges, wobei der zweite Laschenstrang 160 mit Querstegen lösbar mit den beiden benachbarten Laschensträngen 150,170 verbunden ist. Ausgewählte Laschen 103 des zweiten Laschenstranges 160 sind entweder nur mit Laschen des ersten oder nur mit Laschen des dritten Laschenstranges 150,170 verbunden, oder ausgewählte Laschen 103 des zweiten Laschenstranges 160 können mit Querstegen 120 lösbar mit Laschen beider benachbarter Laschenstränge 150,170 verbunden sein.

Gemäß FIG.9 sind die Kettenglieder 102 an den gegenüberliegenden Laschen 103 benachbarter Laschenstränge 150,160,170 entweder an beiden Schmalseiten 105a,b jeweils mit einem Quersteg 120 verbunden und an dem nachfolgenden Kettenglied 102 nicht mit Querstegen verbunden. Gegebenenfalls kann auch in dem Kettenglied 101 jeweils nur ein Quersteg 120 vorgesehen sein, bei in Kettenlängsrichtung aufeinander folgen Gliedern 102 dann beispielsweise abwechselnd an der einen oder an der anderen Schmalseite 105a,b der benachbarten Laschen 103 des Paares von Laschensträngen.

Gemäß FIG.9 sind drei oder ggf. mehr Laschenstränge 150,160, 170 vorgesehen, wobei zumindest ein Laschenstrang 160 zwischen zwei benachbarten Laschensträngen 150,170 angeordnet ist. Der zweite, mittlere Laschenstrang 160 ist mit Querstegen 120 lösbar mit den beiden benachbarten Laschensträngen 150,170 verbunden. Der zweite Laschenstrang 160 weist Laschen 103 auf, welche an einer der Laschenschmalseiten 105a der jeweiligen Lasche 103 mittels eines lösbaren Quersteges 120 mit dem ersten Laschenstrang 150 und an der anderen Schmalseite 105b derselben Lasche 103 mittels eines lösbaren Quersteges 120 mit dem dritten Laschenstrang 170 verbunden ist.

Die Laschen 103 sämtlicher der Laschenstränge nach den FIG.8-9 sind durchgehend entlang der Stränge baugleich ausgebildet. Auf die übrigen Ausführungen zu Erfindung und alternative oder weitergehende Ausgestaltung der Laschen sei verwiesen. Sämtliche Laschen der verschiedenen bzw. sämtlicher der Laschenstränge der Ketten nach FIG. 8 und FIG.9 können mit ein und demselben Formgebungswerkzeug, insbesondere Spritzgusswerkzeug, hergestellt sein bzw. sind entsprechend hergestellt.

### Bezugszeichenliste

- 1: Energieführungskette
- 1A: Untertrum
- 1B: Obertrum
- 1C: Umlenkbereich bzw. Umlenkbogen
- 2: Außenlasche
- 3: Innenlasche
- 4: Querstege
- 5: Gelenkverbinder bzw. Gelenkelement
- 6: Lasche
- 8: Auflage
- 9: Dämpfungsbereich
- 7A, 7B: Endanschlusselemente
- 20: verdickter Mittenbereich
- 20A, 20B: Überlappungsbereiche
- 21A, 21B: Vorsprünge
- 22A, 22B: Taschen
- 23: Versteifungsaufnahme bzw. Vertiefung
- 24: Materialaussparung
- 25: Befestigungsaufnahme
- 30: Verdickter Mittenbereich
- 30A, 30B: Überlappungsbereiche
- 31A, 31B: Vorsprünge
- 32A, 32B: Taschen
- 33: Versteifungsfortsätze
- 34: Materialaussparung
- 35: Befestigungsaufnahme
- 40: Klemmaufnahme
- 40A, 40B: Klemmfläche
- 41: Befestigungsabschnitt
- 51A, 51B: Befestigungsende bzw. Befestigungsbereich
- 52: mittlerer Bereich
- 53: plattenartiger Übergangsbereich
- 54: Anlagefläche
- 61A, 61B: Vorsprünge
- 61C, 61D: Vorsprünge
- 62A, 62B: Anschlagtaschen
- 62C, 62D: Anschlagtaschen
- 101: Energieführungskette
- 102, 102': Kettenglied
- 102a,b: Kettenglieder
- 103, 103': Laschen
- 104a: innere Laschenseitenfläche
- 104b: äußere Laschenseitenfläche
- 105a,b: Schmalseiten
- 106a,b: Laschenstirnseiten
- 107a,b: Endbereiche
- 108: Befestigungsmittel
- 108a: Ausnehmung, Aufnahmenut
- 108b: Verschiebungssicherungsmittel
- 109: Gelenkverbindungen
- 109a: Aufnahmen
- 110: Gelenkelemente
- 111: Dickstellenbereich
- 112: Anschläge
- 113: Anschläge
- 114, 115: Fortsätze
- 114a: Aufnahmen
- 116, 117: Ausnehmung
- 120: Quersteg
- 121: Endbereiche
- 122: Befestigungsmittel
- 123: Verbindungsstück
- 130: Kettenabschnitt
- 150, 160: Laschenstränge
- 170: Laschenstrang
- 180: Obertrum
- 181: Untertrum
- 182: Umlenkbereich
- 201A, 201B: erste stirnseitige Anschlagflächen
- 202A, 202B: Gegenanschlagflächen
- 211A, 211B: innere Anschlagflächen
- 212A, 212B: zweite, äußere Anschlagflächen
- 221A, 221B: erste Gegenanschlagflächen
- 222A, 222B: zweite Gegenanschlagflächen
- 301A, 301B: stirnseitige Gegenanschlagflächen
- 302A, 302B: zweite stirnseitige Anschlagflächen
- 311A, 311B: erste äußere Anschlagflächen
- 312A, 312B: zweite innere Anschlagflächen
- 321A, 321B: äußere Gegenanschlagflächen
- 322A, 322B: innere Gegenanschlagflächen
- 521, 522: gewölbte Materialbereiche
- 523: Hohlraum

- G: Luftspalt
- H: Höhen-Achse bzw. Höhenrichtung
- L: Längsrichtung
- R: Rotationsache
- S1: Höhenmittelebene bzw. Höhenebene
- S2: Längsebene

- L1: Laschenlängsrichtung
- M1: Mittelebene
- R1: Rotationsachse

## Patentansprüche

1. Energieführungskette (1) zur Führung von Leitungen, wie z.B. Kabeln, Schläuchen oder dgl., mit zwei parallelen Laschensträngen, wobei jeder Laschenstrang Seitenlaschen (2, 3; 6) umfasst, welche mittels eines biegsamen Gelenkverbinders (5) miteinander verbunden und gegeneinander abwinkelbar sind, der biegsame Gelenkverbinder (5) in Abwinkelungsrichtung der Seitenlaschen elastisch deformierbar ist, und die Laschenstränge durch Querstege (4) miteinander verbunden sind, wobei die Seitenlaschen (2, 3; 6) Anschlagflächen umfassen, welche bei gestreckter Relativstellung der Seitenlaschen (2, 3; 6) aneinander anliegen und Anschlagflächen umfassen, welche bei vollständig abgewinkelter Relativstellung der Seitenlaschen (2, 3; 6) aneinander anliegen, und wobei seitlich vorstehende Vorsprünge (21A, 21B; 31A, 31B) einer Seitenlasche (2, 3; 6) in vertiefte Taschen (22A, 22B; 32A, 32B) einer benachbarten Seitenlasche (2, 3; 6) eingreifen und in gestreckter Relativstellung (1B) zumindest erste Anschlagflächen (211A, 211B; 311A, 311B) der Vorsprünge mit ersten Gegenanschlagflächen (221A, 221B; 321A, 321B) der Taschen zusammenwirken und in vollständig abgewinkelter Relativstellung zumindest zweite Anschlagflächen (212A, 212B; 312A, 312B) der Vorsprünge mit zweiten Gegenanschlagflächen (222A, 222B; 322A, 322B) der Taschen zusammenwirken; und wobei alle Seitenlaschen (2, 3; 6) zumindest mit ihren Anschlagflächen in sich symmetrisch gestaltet sind;
**dadurch gekennzeichnet, dass**
jede Seitenlasche (2, 3; 6) mindestens zwei Vorsprünge (21A, 21B; 31A, 31B) mit ersten und zweiten Anschlagflächen (211A, 211B; 311A, 311B bzw. 212A, 212B; 312A, 312B) und mindestens zwei Taschen (22A, 22B; 32A, 32B) mit ersten und zweiten Gegenanschlagflächen (221A, 221B; 321A, 321B bzw. 222A, 222B; 322A, 322B) umfasst, und dass die beiden Vorsprünge (21A, 21B; 31A, 31B) und die beiden Taschen (22A, 22B; 32A, 32B) symmetrisch an der Seitenlasche (2, 3; 6) vorgesehen sind, insbesondere spiegelsymmetrisch zu einer Höhenebene (S1) oder rotationssymmetrisch zu einer Höhenachse (H; R) der Seitenlasche (2, 3; 6).

2. Energieführungskette nach Anspruch 1, **dadurch gekennzeichnet, dass** in beiden Laschensträngen als Seitenlaschen jeweils unterschiedliche Außenlaschen (2) und Innenlaschen (3) vorgesehen sind, welche sich in Längsrichtung der Kette abwechseln, wobei sowohl die Innenlaschen (3) als auch die Außenlaschen (2) jeweils in Bezug auf ihre senkrecht zur Längsrichtung verlaufende Höhenebene (S1), welche senkrecht zur Längsrichtung der Kette und zumindest im Wesentlichen senkrecht zu den Seitenlaschen verläuft, zumindest mit ihren anschlagwirksamen Anschlagflächen jeweils in sich spiegelsymmetrisch gestaltet sind, so dass gleiche Außenlaschen (2) und gleiche Innenlaschen (3) in beiden Laschensträngen verwendbar sind, und dass jede Außenlasche (2) zwei Vorsprünge (21A, 21B) und zwei Taschen (22A, 22B) umfasst und jede Innenlasche (3) zwei Vorsprünge (31A, 31B) und zwei Taschen (32A, 32B) umfasst; vorzugsweise wobei stirnseitig an der Innenlasche oder Außenlasche, insbesondere am Überlappungsbereich, zwei gegenüberliegende, vorstehende Versteifungsfortsätze (33) vorgesehen sind, welche in Strecklage jeweils in eine korrespondierende Versteifungsaufnahme (23) am Mittenbereich der verbundenen Außen- bzw. Innenlasche eingreift.

3. Energieführungskette nach Anspruch 1 oder 2, **dadurch gekennzeichnet, dass** die Außenlaschen (2) und Innenlaschen (3) jeweils bezüglich einer Längsebene (S2), welche in Längsrichtung (L) der Kette und zumindest im Wesentlichen senkrecht zu den Seitenlaschen (2; 3) verläuft, insbesondere durch den bzw. die Gelenkverbinder (5), zwei gegenüberliegende Höhenbereiche aufweist und an den Außenlaschen (2) und Innenlaschen (3) jeweils in dem einen Höhenbereich Vorsprünge (21A, 21B; 31A, 31B) vorgesehen sind und in dem anderen gegenüberliegenden Höhenbereich Taschen (22A, 22B; 32A, 32B) vorgesehen sind.

4. Energieführungskette nach einem der vorstehenden Ansprüche, insbesondere nach Anspruch 2, wobei die Querstege (4) mit den Seitenlaschen (2) einen Aufnahmeraum für zu führende Leitungen begrenzen, **dadurch gekennzeichnet, dass**
mindestens zwei Vorsprünge (21A, 21B; 31A, 31B) einer Seitenlasche (2; 3) vom Aufnahmeraum weg vorstehen und mindestens zwei Taschen (22A, 22B; 32A, 32B) dieser Seitenlasche (2; 3) zum Aufnahmeraum hin öffnen, oder umgekehrt;
insbesondere dass die Taschen (22A, 22B) der Außenlaschen (2) zum Aufnahmeraum hin öffnen und die Vorsprünge (21A, 21B) der Außenlaschen (2) vom Aufnahmeraum weg vorstehen und die Taschen (32A, 32B) der Innenlaschen (3) zum Aufnahmeraum hin öffnen und die Vorsprünge (31A, 31B) der Innenlaschen (3) vom Aufnahmeraum weg vorstehen.

5. Energieführungskette nach Anspruch 1, **dadurch gekennzeichnet, dass** in beiden Laschensträngen durchgehend aufeinanderfolgenden baugleiche Seitenlaschen (6) vorgesehen sind, welche zumindest mit ihren anschlagwirksamen Anschlagflächen in sich rotationssymmetrisch sind in Bezug auf eine Höhenachse (H/R), welche senkrecht zur Längsrichtung (L) der Kette und zumindest im Wesentlichen parallel zu den Seitenlaschen (6), vorzugsweise in deren Mittelebene, verläuft, insbesondere wobei die Seitenlasche (6) zwei Vorsprünge (61C, 61D) hat, welche vom Aufnahmeraum weg vorstehen, und zwei Vorsprünge (61A, 61B), welche zum Aufnahmeraum hin vorstehen und die Seitenlasche zwei Taschen (62A, 62B) hat die zum Aufnahmeraum hin öffnen und zwei Taschen (62C, 62D) die vom Aufnahmeraum weg öffnen.

6. Energieführungskette nach einem der vorstehenden Ansprüche, insbesondere nach Anspruch 2, **dadurch gekennzeichnet, dass** die Querstege (4) lösbar an Querstegaufnahmen (40) der Seitenlaschen befestigt sind, insbesondere an den Außenlaschen (2), wobei vorzugsweise jede der Querstegaufnahmen eine mit der Seitenlasche einteilige Klemmaufnahme (40) bildet mit zwei in Längsrichtung (L) der Kette gegenüberliegenden Klemmflächen (40A, 40B) zwischen denen ein komplementär geformter Befestigungsabschnitt (41) des Querstegs eingeklemmt bzw. einklemmbar ist, wobei die Klemmflächen vorzugweise einen konvexen Rastbereich umfassen.

7. Energieführungskette nach einem der vorstehenden Ansprüche, insbesondere nach Anspruch 3, wobei die Energieführungskette Leitungen zwischen Anschlussstellen führt, von denen mindestens eine zwei relativ zur anderen beweglich ist, und die Energieführungskette bei Relativbewegung der Anschlussstellen verfahrbar ist unter Bildung eines Obertrums (1B), insbesondere freitragenden Obertrums (1B) und eines Untertrums (1A), die über einen Umlenkbereich (1C) ineinander übergehen, und wobei die Seitenlaschen (2, 3) im Wesentlichen in Längsrichtung (L) verlaufende einander abgewandte Schmalseiten aufweisen und wobei vorzugsweise
- die im Umlenkbereich innenliegenden bzw. dem jeweils anderen Trum zugewandten Schmalseiten eine geradlinige in Längsrichtung unterbrechungsfreie Auflage (8) bilden und/oder
- die im Umlenkbereich außenliegenden bzw. dem anderen jeweils Trum abgewandten Schmalseiten der Seitenlaschen, insbesondere der Innenlaschen, einen verformbaren Dämpfungsbereich (9) umfassen zur Dämpfung des Übergangs des Umlenkbereich in das aufliegende Untertrum; wobei der Dämpfungsbereich (9) besonders bevorzugt ein brückenförmiges, einteilig mit der Schmalseite der Seitenlasche gebildetes Federelement umfasst, welches beidseitig mit der Schmalseite verbunden.

8. Energieführungskette nach einem der vorstehenden Ansprüche, **dadurch gekennzeichnet, dass** jeweils zwei benachbarte Seitenlaschen (2, 3) durch einen separaten Gelenkverbinder (5) miteinander verbunden sind, oder eine Längsabschnitt mit drei oder mehr Seitenlaschen (2, 3) durch einen gemeinsamen Gelenkverbinder miteinander verbunden sind.

9. Energieführungskette nach einem der vorstehenden Ansprüche, insbesondere nach Anspruch 2, **dadurch gekennzeichnet, dass** jede Seitenlasche (2, 3; 6), insbesondere die Innenlasche und die Außenlasche (2,3), jeweils einen verdickten Mittenbereich (20; 30) und hieran anschließend mindestens zwei dünnere Überlappungsbereiche (20A, 20B; 30A, 30B) aufweist, mit denen die Seitenlaschen, insbesondere die Innen- und Außenlaschen, in Längsrichtung (L) überlappen, wobei weitere stirnseitige Anschlagflächen, welche im Wesentlichen in Längsrichtung weisen, stirnseitig am Mittenbereich (202A, 202B; 301A, 301B) und stirnseitig an den Überlappungsbereichen (201A, 201B; 302A, 302B) vorgesehen sind um anschlagwirksam zusammenzuwirken.

10. Energieführungskette nach einem der vorstehenden Ansprüche, **dadurch gekennzeichnet, dass** die ersten und zweiten Anschlagflächen (211A, 211B; 311A, 311B bzw. 212A, 212B; 312A, 312B) und damit zusammenwirkenden ersten und zweiten Gegenanschlagflächen (221A, 221B; 321A, 321B bzw. 222A, 222B; 322A, 322B), sowie vorzugsweise die weiteren stirnseitige Anschlagflächen (202A, 202B; 301A, 301B; 201A, 201B; 302A, 302B) zueinander kongruent konvex bzw. konkav gekrümmt ausgeführt sind, insbesondere durchgehend und/oder stetig gekrümmt.

11. Energieführungskette nach einem der vorstehenden Ansprüche, insbesondere nach Anspruch 9, **dadurch gekennzeichnet, dass** die jeweils verbundenen Seitenlaschen (2, 3) durch den Gelenkverbinder (5) mit einem seitlichen Luftspalt (G) aneinander gehalten sind, insbesondere mit einem seitlichen Luftspalt (G) zwischen den gegenüberliegenden Überlappungsbereichen (20A, 20B; 30A, 30B).

12. Energieführungskette nach einem der vorstehenden Ansprüche, **dadurch gekennzeichnet, dass** zumindest an einem verdickten Mittenbereich (20, 30) der Seitenlasche mindestens eine Materialaussparung (24; 34) mit mehreren, insbesondere überwiegend mit konkav gekrümmten Begrenzungsflächen vorgesehen sind.

13. **Seitenlasche** (2, 3; 6) für eine Energieführungskette, insbesondere nach Anspruch 1, insbesondere Außenlasche (2) oder Innenlasche (3) für eine Energieführungskette nach Anspruch 2, wobei mehrere Seitenlaschen mittels eines biegsamen Gelenkverbinders (5) zu einem Laschenstrang miteinander verbindbar und gegeneinander abwinkelbar sind, und wobei
die Seitenlasche (2, 3) seitlich vorstehende Vorsprünge und korrespondierende vertiefte Taschen umfasst, um bei Verbindung zweier Seitenlaschen in gestreckter Relativstellung zumindest erste Anschlagflächen der Vorsprünge mit ersten Gegenanschlagflächen der Taschen zusammenwirken zu lassen und in vollständig abgewinkelter Relativstellung zumindest zweite Anschlagflächen der Vorsprünge mit zweiten Gegenanschlagflächen der Taschen zusammenwirken zu lassen;
**dadurch gekennzeichnet, dass**
die Seitenlasche zumindest mit ihren Anschlagflächen in sich symmetrisch gestaltet ist, und mindestens zwei Vorsprünge (21A, 21B; 31A, 31B) mit ersten und zweiten Anschlagflächen und mindestens zwei Taschen (22A, 22B; 32A, 32B)) mit ersten und zweiten Gegenanschlagflächen umfasst, wobei die beiden Vorsprünge und die beiden Taschen symmetrisch an der Seitenlasche vorgesehen sind, insbesondere spiegelsymmetrisch zu einer Höhenebene (S1) an der Außen- bzw. Innenlasche, oder rotationssymmetrisch zu einer Höhenachse (H, R) der Seitenlasche, wobei eine Laschenseite bzw. Laschenseitenfläche der Seitenlasche (2, 3; 6) die mindestens zwei Taschen (22A, 22B; 32A, 32B) und die andere Laschenseite bzw. Laschenseitenfläche der Seitenlasche (2, 3; 6) die mindestens zwei Vorsprünge (21A, 21B; 31A, 31B) aufweist.

14. Seitenlasche nach Anspruch 13, **gekennzeichnet durch** mindestens ein kennzeichnendes Merkmal nach einem der Ansprüche 2 bis 12.

15. Energieführungskette bzw. Seitenlasche nach einem der vorstehenden Ansprüche, **dadurch gekennzeichnet, dass** jede Seitenlasche (2, 3; 6) einteilig aus Kunststoff hergestellt ist und vorzugsweise der bzw. jeder Gelenkverbinder (5) separat aus einem anderen dauerelastischen bzw. biegsameren Kunststoff hergestellt ist als die Seitenlaschen;
und/oder dass jeweils zwei Seitenlaschen durch einen Gelenkverbinder (5) verbunden sind, wobei die Seitenlaschen in Längsrichtung offene Befestigungsaufnahmen (25; 25) aufweisen, in welchen ein jeweiliges Befestigungsende des Gelenkverbinders befestigt ist, insbesondere eingepresst und, wobei vorzugsweise der Gelenkverbinder mit Überlänge dimensioniert derart, dass der Gelenkverbinder in Strecklage der Trume gestaucht wird.

## Claims

1. An energy guide chain (1) for guiding lines like for example cables, hoses or the like comprising two parallel plate lines, wherein each plate line includes side plates (2, 3; 6) which are connected together by means of a flexible joint connector (5) and can be angled relative to each other, the flexible joint connector (5) is elastically deformable in an angulation direction of the side plates and the plate lines are connected together by transverse bars (4), wherein the side plates (2, 3; 6) include abutment surfaces which in the straight relative position of the side plates (2, 3; 6) bear against each other and include abutment surfaces which in the completely angled relative position of the side plates (2, 3; 6) bear against each other and wherein laterally protruding projections (21A, 21B; 31A, 31B) of a side plate (2, 3; 6) engage into recessed pockets (22A, 22B; 32A, 32B) of an adjacent side plate (2, 3; 6) and in the straight relative position (18) at least first abutment surfaces (211A, 211B; 311A, 311B) of the projections cooperate with first counterpart abutment surfaces (221A, 221B; 321A, 321B) of the pockets and in the completely angled relative position at least second abutment surfaces (212A, 212B; 312A, 312B) of the projections cooperate with second counterpart abutment surfaces (222A, 222B; 322A, 322B) of the pockets and wherein all side plates (2, 3; 6) at least with their abutment surfaces are in themselves of a symmetrical configuration;
**characterised in that**
each side plate (2, 3; 6) has at least two projections (21A, 21B; 31A, 31B) having first and second abutment surfaces (211A, 211B; 311A, 311B and 212A, 212B; 312A, 312B) and at least two pockets (22A, 22B; 32A, 32B) having first and second counterpart abutment surfaces (221A, 221B; 321A, 321B and 222A, 222B; 322A, 322B) and that the two projections (21A, 21B; 31A, 31B) and the two pockets (22A, 22B; 32A, 32B) are provided symmetrically at the side plate (2, 3; 6), in particular in mirror-image symmetry relative to a heightwise plane (S1) or rotationally symmetrical relative to a heightwise axis (H; R) of the side plate (2, 3; 6).

2. An energy guide chain according to claim 1 **characterised in that** provided in both plate lines as side plates are respectively different outer plates (2) and inner plates (3) which alternate in the longitudinal direction of the chain, wherein both the inner plates (3) and the outer plates (2) in relation to their heightwise plane (S1) which extends perpendicularly to the longitudinal direction and which extends perpendicularly to the longitudinal direction of the chain and at least substantially perpendicularly to the side plates are respectively of a mirror-image symmetrical configuration in themselves with their abutment-operative abutment surfaces so that identical outer plates (2) and identical inner plates (3) can be used in both plate lines and that each outer plate (2) includes two projections (21A, 21B) and two pockets (22A, 22B) and each inner plate (3) includes two projections (31A, 31B) and two pockets (32A, 32B); preferably wherein at the end on the inner plate or outer plate, in particular at the overlap region, are two oppositely disposed projecting stiffening extensions (33) which in the straight position respectively engage into a corresponding stiffening receiving means (23) at the central region of the connected outer or inner plate.

3. An energy guide chain according to claim 1 or claim 2 **characterised in that** the outer plates (2) and inner plates (3) in each case with respect to a longitudinal plane (S2) which extends in the longitudinal direction (L) of the chain and at least substantially perpendicularly to the side plates (2; 3), in particular through the joint connector or connectors (5), have two mutually opposite heightwise regions and provided at the outer plates (2) and inner plates (3) are respective projections (21A, 21B; 31A, 31B) in the one heightwise region and pockets (22A, 22B; 32A, 32B) are provided in the other opposite heightwise region.

4. An energy guide chain according to one of the preceding claims, in particular according to claim 2, wherein the transverse bars (4) with the side plates (2) define a receiving space for lines to be guided, **characterised in that** at least two projections (21A, 21B; 31A, 31B) of a side plate (2; 3) project away from the receiving space and at least two abutment pockets (22A, 22B; 32A, 32B) of said side plate (2; 3) open towards the receiving space, or vice-versa; in particular that the pockets (22A, 22B) of the outer plates (2) open towards the receiving space and the projections (21A, 21B) of the outer plates (2) project away from the receiving space and the pockets (32A, 32B) of the inner plates (3) open towards the receiving space and the projections (31A, 31B) of the inner plates (3) project away from the receiving space.

5. An energy guide chain according to claim 1 **characterised in that** there are provided in both plate lines continuously successive structurally identical side plates (6) which are rotationally symmetrical at least with their abutment-operative abutment surfaces in relation to a heightwise axis (H/R) which extends perpendicularly to the longitudinal direction (L) of the chain and at least substantially parallel to the side plates (6), preferably in the central plane thereof, in particular wherein the side plate (6) has two projections (61C, 61D) which project away from the receiving space and two projections (61A, 61B) which project towards the receiving space and the side plate has two pockets (62A, 62B) which open towards the receiving space and two pockets (62C, 62D) which open away from the receiving space.

6. An energy guide chain according to one of the preceding claims, in particular according to claim 2, **characterised in that** the transverse bars (4) are fixed releasably to transverse bar receiving means (40) of the side plates, in particular at the outer plates (2), wherein preferably each of the transverse bar receiving means forms a clamping receiving means (40) which is in one piece with the side plate having two clamping surfaces (40A, 40B) which are in opposite relationship in the longitudinal direction (L) of the chain and between which a fixing portion (41) of complementary shape of the transverse bar is or can be clamped, wherein the clamping surfaces preferably include a convex latching region.

7. An energy guide chain according to one of the preceding claims, in particular according to claim 3, wherein the energy guide chain guides lines between connecting locations, of which at least one is moveable relative to the other and the energy guide chain is displaceable upon relative movement of the connecting locations with the formation of an upper run (1B), in particular a self-supporting upper run (1B), and a lower run (1A) which merge into each other by way of a direction-changing region (1C) and wherein the side plates (2, 3) have narrow sides which extend substantially in the longitudinal direction (L) and face away from each other and wherein preferably
- the narrow sides which are inward in the direction-changing region or face towards the respective other run form a rectilinear support (8) which is interruption-free in the longitudinal direction, and/or
- the narrow sides of the side plates, that are outward in the direction-changing region or face away from the respective other run, in particular of the side plates, include a deformable damping region (9) for damping the transition of the direction-changing region into the lying lower run; wherein the damping region (9) especially preferably includes a bridge-shaped spring element which is formed in one piece with the narrow side of the side plate and which is connected at both sides to the narrow side.

8. An energy guide chain according to one of the preceding claims **characterised in that** two adjacent side plates (2, 3) are respectively connected together by a separate joint connector (5) or a longitudinal portion with three or more side plates (2, 3) are connected together by a common joint connector.

9. An energy guide chain according to one of the preceding claims, in particular according to claim 2, **characterised in that** each side plate (2, 3; 6), in particular the inner plate and the outer plate (2, 3), respectively has a thickened central region (20; 30) and adjoining same at least two thinner overlap regions (20A, 20B; 30A, 30B), with which the side plates, in particular the inner and outer plates, overlap in the longitudinal direction (L), wherein further end abutment surfaces which face substantially in the longitudinal direction are provided at the end at the central region (202A, 202B; 301A, 301B) and at the end at the overlap regions (201A, 201B; 302A, 302B) to cooperate in abutment-operative relationship.

10. An energy guide chain according to one of the preceding claims **characterised in that** the first and second abutment surfaces (211A, 211B; 311A, 311B and 212A, 212B; 312a, 312b) and cooperating therewith first and second counterpart abutment surfaces (221A, 221B; 321A, 321B and 222A, 222B; 322A, 322B) and preferably the further end abutment surfaces (202A, 202B; 301A, 301B; 201A, 201B; 302A, 302B) are of a mutually congruently convexly or concavely curved configuration and in particular are curved continuously and/or steadily.

11. An energy guide chain according to one of the preceding claims, in particular according to claim 9, **characterised in that** the respectively connected side plates (2, 3) are held to each other by the joint connector (5) with a lateral air gap (G), in particular with a lateral air gap (G) between the opposing overlap regions (20A, 20B; 30A, 30B).

12. An energy guide chain according to one of the preceding claims **characterised in that** provided at least at a thickened central region (20, 30) of the side plate is at least one material recess (24; 34) having a plurality of defining surfaces, in particular predominantly with concavely curved surfaces.

13. **A side plate** (2, 3; 6) for an energy guide chain, in particular according to claim 1, in particular an outer plate (2) or inner plate (3) for an energy guide chain according to claim 2, wherein a plurality of side plates can be connected together by means of a flexible joint connector (5) to constitute a plate line and can be angled relative to each other and wherein the side plate (2, 3) includes laterally protruding projections and corresponding recessed pockets in order upon connection of two side plates in a straight relative position to cause at least first abutment surfaces of the projections to cooperate with first counterpart abutment surfaces of the pockets and in the completely angled relative position to cause at least second abutment surfaces of the projections to cooperate with second counterpart abutment surfaces of the pockets;
**characterised in that**
the side plate at least with its abutment surfaces is in itself of a symmetrical configuration and includes at least two projections (21A, 21B; 31A, 31B) with first and second abutment surfaces and at least two pockets (22A, 22B; 32A, 32B) with first and second counterpart abutment surfaces, wherein the two projections and the two pockets are provided symmetrically on the side plate, in particular in mirror-image symmetry relative to a heightwise plane (S1) at the outer or inner plate or rotationally symmetrically relative to a heightwise axis (H, R) of the side plate, wherein one side or side surface of the side plate (2, 3; 6) has the at least two pockets (22A, 22B; 32A, 32B) and the other side or side surface of the side plate (2, 3; 6) has the at least two projections (21A, 21B; 31A, 31B).

14. A side plate according to claim 13 **characterised by** at least one characterising feature according to one of claims 2 to 12.

15. An energy guide chain or side plate according to one of the preceding claims **characterised in that** each side plate (2, 3; 6) is made in one piece from plastic and preferably the or each joint connector (5) is produced separately from another permanently elastic or more flexible plastic than the side plates;
and/or that two respective side plates are connected by a joint connector (5), wherein the side plates have fixing receiving means (25; 55) which are open in the longitudinal direction and in which a respective fixing end of the joint connector is fixed, in particular being pressed therein, and wherein preferably the joint connector is sized with an overlength such that the joint connector is compressed in the straight position of the run.

## Revendications

1. Chaîne porte-câbles (1) pour le guidage de conduites, comme par exemple des câbles, des tuyaux ou similaires, avec deux lignes de pattes parallèles, chaque ligne de patte comprenant des pattes latérales (2, 3; 6) qui sont reliées entre elles au moyen d'un connecteur articulé flexible (5) et qui peuvent être coudées l'une par rapport à l'autre, le connecteur articulé flexible (5) étant déformable élastiquement dans la direction de coudage des pattes latérales, et les lignes de pattes étant reliées entre eux par des traverses (4), les pattes latérales (2, 3; 6) comprennent des surfaces de butée qui s'appliquent l'une contre l'autre lorsque les pattes latérales (2, 3; 6) sont en position relative étirée et comprennent des surfaces de butée qui s'appliquent l'une contre l'autre lorsque les pattes latérales (2, 3; 6) sont en position relative complètement coudée, et dans lequel des saillies (21A, 21B; 31A, 31B) d'une patte latérale (2, 3; 6) s'engagent dans des poches en creux (22A, 22B; 32A, 32B) d'une patte latérale voisine (2, 3; 6) et, en position relative étirée (1B), au moins des premières surfaces de butée (211A, 211B; 311A, 311B) des saillies coopèrent avec des premières surfaces de contre-butée (221A, 221B; 321A, 321B) des poches et, dans une position relative complètement coudée, au moins deuxième surfaces de butée (212A, 212B; 312A, 312B) des saillies coopèrent avec des deuxièmes surfaces de contre-butée (222A, 222B; 322A, 322B) des poches; et toutes les pattes latérales (2, 3; 6) étant configurées de manière symétrique en soi au moins avec leurs surfaces de butée;
**caractérisée en ce que**
chaque patte latérale (2, 3; 6) comporte au moins deux saillies (21A, 21B; 31A, 31B) avec des première et deuxième surfaces de butée (211A, 211B; 311A, 311B ou 212A, 212B; 312A, 312B) et au moins deux poches (22A, 22B; 32A, 32B) avec des première et deuxième surfaces de contre-butée (221A, 221B; 321A, 321B ou 222A, 222B; 322A, 322B) et **en ce que** les deux saillies (21A, 21B; 31A, 31B) et les deux poches (22A, 22B; 32A, 32B) sont prévues de manière symétrique sur la patte latérale (2, 3; 6), en particulier de manière symétrique au miroir par rapport à un plan de hauteur (S1) ou de manière symétrique en rotation par rapport à un axe de hauteur (H; R) de la patte latérale (2, 3; 6).

2. Chaîne porte-câbles selon la revendication 1, **caractérisée en ce que** dans les deux lignes de pattes sont prévues comme pattes latérales des pattes extérieures (2) et des pattes intérieures (3) respectivement différentes, qui alternent dans la direction longitudinale de la chaîne, les pattes intérieures (3) ainsi que les pattes extérieures (2) s'étendant respectivement par rapport à leur plan de hauteur (S1) perpendiculaire à la direction longitudinale, qui est perpendiculaire à la direction longitudinale de la chaîne et au moins essentiellement perpendiculaire aux pattes latérales, étant respectivement conçues de manière symétrique en miroir en soi au moins avec leurs surfaces de butée agissant comme des butées, de sorte que des pattes extérieures (2) identiques et des pattes intérieures (3) identiques peuvent être utilisées dans les deux lignes de pattes, et **en ce que** chaque patte extérieur (2) comprend deux saillies (21A, 21B) et deux poches (22A, 22B) et chaque patte intérieur (3) comprend deux saillies (31A, 31B) et deux poches (32A, 32B); de préférence, deux prolongements de renforcement (33) opposés et saillants étant prévus sur le côté frontal de la patte intérieure ou de la patte extérieure, en particulier dans la zone de chevauchement, lesquels, en position d'étirement, s'engagent respectivement dans un logement de renforcement (23) correspondant dans la zone centrale de la patte extérieure ou de la patte extérieure reliée.

3. Chaîne porte-câbles selon la revendication 1 ou 2, **caractérisée en ce que** les pattes extérieures (2) et les pattes intérieures (3) présentent chacune, par rapport à un plan longitudinal (S2) qui s'étend dans la direction longitudinale (L) de la chaîne et au moins sensiblement perpendiculairement aux pattes latérales (2; 3), en particulier à travers le ou les connecteur articulé flexible (5), deux zones de hauteur opposées, et **en ce que** des saillies (21A, 21B; 31A, 31B) sont prévues sur les pattes extérieures (2) et les pattes intérieures (3) respectivement dans une zone de hauteur et des poches (22A, 22B; 32A, 32B) sont prévues dans l'autre zone de hauteur opposée.

4. Chaîne porte-câbles selon l'une des revendications précédentes, en particulier selon la revendication 2, dans laquelle les traverses (4) délimitent avec les pattes latérales (2) un espace de réception pour des câbles à guider, **caractérisée en ce que** au moins deux saillies (21A, 21B; 31A, 31B) d'une patte latérale (2; 3) font saillie à l'opposé de l'espace de réception et au moins deux poches (22A, 22B; 32A, 32B) de cette patte latérale (2; 3) s'ouvrent vers l'espace de réception ou inversement;
en particulier **en ce que** les poches (22A, 22B) des pattes extérieures (2) s'ouvrent vers l'espace de réception et les saillies (21A, 21B) des pattes extérieures (2) dépassent de l'espace de réception en s'éloignant, et les poches (32A, 32B) des pattes intérieures (3) s'ouvrent vers l'espace de réception et les saillies (31A, 31B) des pattes intérieures (3) dépassent de l'espace de réception en s'éloignant.

5. Chaîne porte-câbles selon la revendication 1, **caractérisée en ce que** dans les deux lignes de pattes sont prévues des pattes latérales (6) de construction identique se succédant sans interruption, qui sont, au moins avec leurs surfaces de butée agissant comme butées, symétriques en rotation par rapport à un axe de hauteur (H/R) qui est perpendiculaire à la direction longitudinale (L) de la chaîne et au moins sensiblement parallèle aux pattes latérales (6), de préférence dans leur plan médian, en particulier dans lequel la patte latérale (6) comporte deux saillies (61C, 61D) qui dépassent de l'espace de réception en s'éloignant et deux saillies (61A, 61B) qui dépassent vers l'espace de réception, et la patte latérale comporte deux poches (62A, 62B) qui s'ouvrent vers l'espace de réception et deux poches (62C, 62D) qui s'ouvrent en s'éloignant de l'espace de réception.

6. Chaîne porte-câbles selon l'une quelconque des revendications précédentes, en particulier selon la revendication 2, **caractérisée en ce que** les traverses (4) sont fixées de manière amovible sur des logements de traverses (40) des pattes latérales, en particulier sur les pattes extérieures (2), chacun des logements de traverses formant de préférence un logement de serrage (40) d'un seul tenant avec la patte latérale, avec deux surfaces de serrage (40A, 40B) opposées dans la direction longitudinale (L) de la chaîne, entre lesquelles une section de fixation (41) de forme complémentaire de la traverse est serrée ou peut être serrée, les surfaces de serrage comprennent de préférence une zone d'encliquetage convexe.

7. Chaîne porte-câbles selon l'une des revendications précédentes, en particulier selon la revendication 3, dans laquelle la chaîne porte-câbles guide des câbles entre des points de raccordement, dont au moins un est mobile par rapport à l'autre, et la chaîne porte-câbles peut être déplacée lors du mouvement relatif des points de raccordement en formant un brin supérieur (1B), en particulier un brin supérieur (1B) en porte-à-faux, et un brin inférieur (1A) qui se rejoignent par l'intermédiaire d'une zone de renvoi (1C), et dans laquelle les pattes latérales (2, 3) présentent des côtés étroits opposés l'un à l'autre et s'étendant essentiellement dans la direction longitudinale (L), et dans laquelle de préférence
les côtés étroits situés à l'intérieur dans la zone de renvoi ou tournés vers l'autre brin respectif forment un appui (8) rectiligne sans interruption dans la direction longitudinale et/ou
- les côtés étroits des pattes latérales, en particulier des pattes intérieures, situés à l'extérieur dans la zone de renvoi ou détournés de l'autre brin respectif, comprennent une zone d'amortissement (9) déformable pour amortir la transition de la zone de renvoi dans le brin inférieur en appui; la zone d'amortissement (9) comprenant de manière particulièrement préférée un élément de ressort en forme de pont, formé d'une seule pièce avec le côté étroit de la patte latérale, élément de ressort qui est relié des deux côtés au côté étroit.

8. Chaîne porte-câbles selon l'une des revendications précédentes, **caractérisée en ce que** deux pattes latérales (2, 3) voisines sont respectivement reliées entre elles par un connecteur articulé (5) séparé ou **en ce qu'**une section longitudinale comporte trois pattes latérales (2, 3) ou plus qui sont reliées l'une à l'autre par un connecteur articulé commun.

9. Chaîne porte-câbles selon l'une des revendications précédentes, en particulier selon la revendication 2, **caractérisée en ce que** chaque patte latérale (2, 3; 6), en particulier la patte intérieure et la patte extérieure (2, 3), comporte respectivement une zone centrale épaissie (20; 30) et, à la suite de celle-ci, au moins deux zones de chevauchement plus minces (20A, 20B; 30A, 30B) avec lesquelles les pattes latérales, en particulier les pattes intérieures et extérieures, se chevauchent dans la direction longitudinale (L), d'autres surfaces de butée frontales, qui sont orientées essentiellement dans la direction longitudinale, étant prévues sur la face frontale de la zone centrale (202A, 202B; 301A, 301B) et sur la face frontale des zones de chevauchement (201A, 201B; 302A, 302B), afin de coopérer de manière efficace comme butée.

10. Chaîne porte-câbles selon l'une des revendications précédentes, **caractérisée en ce que** les premières et deuxièmes surfaces de butée (211A, 211B; 311A, 311B ou 212A, 212B; 312A, 312B) et les premières et deuxièmes contre-surfaces de butée (221A, 221B; 321A, 321B ou 222A, 222B; 322A, 322B) coopérant avec elles ainsi que, de préférence, les autres surfaces de butée frontales (202A, 202B; 301A, 301B; 201A, 201B; 302A, 302B) sont réalisées avec une courbure convexe ou concave congruente l'une par rapport à l'autre, en particulier avec une courbure continue et/ou constante.

11. Chaîne porte-câbles selon l'une des revendications précédentes, en particulier selon la revendication 9, **caractérisée en ce que** les pattes latérales (2, 3) respectivement reliées sont maintenues l'une contre l'autre par le connecteur articulé (5) avec un entrefer latéral (G), en particulier avec un entrefer latéral (G) entre les zones de chevauchement opposées (20A, 20B; 30A, 30B) .

12. Chaîne de guidage d'énergie selon l'une des revendications précédentes, **caractérisée en ce qu'**au moins sur une zone centrale épaissie (20, 30) de la patte latérale est prévu au moins un évidement de matériau (24; 34) avec plusieurs surfaces de délimitation, en particulier principalement avec des surfaces de délimitation à courbure concave.

13. **Patte latérale** (2, 3; 6) pour une chaîne porte-câbles, en particulier selon la revendication 1, en particulier patte extérieure (2) ou patte intérieure (3) pour une chaîne porte-câbles selon la revendication 2, plusieurs pattes latérales pouvant être reliées entre elles au moyen d'un connecteur articulé flexible (5) pour former une ligne de pattes et pouvant être coudées les unes par rapport aux autres, et dans laquelle
la patte latérale (2, 3) comprend des saillies dépassent latéralement et des poches en creux correspondantes, afin de faire coopérer, lors de la liaison de deux pattes latérales, en position relative étirée, au moins des premières surfaces de butée des saillies avec des premières surfaces de contre-butée des poches et afin de faire coopérer, en position relative complètement coudée, au moins des deuxièmes surfaces de butée des saillies avec des deuxièmes surfaces de contre-butée des poches;
**caractérisée en ce que**
la patte latérale est conçue de manière symétrique en soi au moins avec ses surfaces de butée, et comprend au moins deux saillies (21A, 21B; 31A, 31B) avec des premières et des deuxièmes surfaces de butée et au moins deux poches (22A, 22B; 32A, 32B) avec des premières et des deuxièmes surfaces de contre-butée, les deux saillies et les deux poches étant prévues de manière symétrique sur la patte latérale, en particulier de manière symétrique en miroir par rapport à un plan de hauteur (S1) sur la patte extérieure ou sur la patte intérieure, ou à symétrie de rotation par rapport à un axe de hauteur (H, R) de la patte latérale, un côté de patte ou surface latérale de patte de la patte latérale (2, 3; 6) présentant les au moins deux poches (22A, 22B; 32A, 32b) et l'autre côté de patte ou surface latérale de patte de la patte latérale (2, 3; 6) présentant les au moins deux saillies (21A, 21B; 31A, 31B).

14. Patte latérale selon la revendication 13, **caractérisée par** au moins une caractéristique selon l'une des revendications 2 à 12.

15. Chaîne porte-câble ou patte latérale selon l'une des revendications précédentes, **caractérisée en ce que** chaque patte latérale (2, 3; 6) est fabriquée d'une seule pièce en matière plastique et **en ce que**, de préférence, le ou chaque connecteur articulé (5) est fabriqué séparément en une autre matière plastique à élasticité permanente ou plus flexible que les pattes latérales;
et/ou **en ce que** deux pattes latérales sont respectivement reliées par un connecteur articulé (5), les pattes latérales présentant des logements de fixation (25; 25) ouverts dans le sens longitudinal, dans lesquels une extrémité de fixation respective du connecteur articulé est fixée, en particulier par pression, et le connecteur articulé étant de préférence dimensionné avec une surlongueur, de telle sorte que le connecteur articulé est comprimé en position d'extension des brins.
